(19) **Europäisches Patentamt / European Patent Office / Office européen des brevets**

(11) **EP 4 081 421 B1**

(12) **EUROPEAN PATENT SPECIFICATION**

(45) Date of publication and mention
of the grant of the patent:
**20.11.2024  Bulletin 2024/47**

(21) Application number: **20842333.5**

(22) Date of filing: **23.12.2020**

(51) International Patent Classification (IPC):
**B60K 35/232** (2024.01)     **B60K 35/28** (2024.01)
**B60K 35/29** (2024.01)     **G01C 21/36** (2006.01)
**G06V 20/58** (2022.01)     **G08G 1/0962** (2006.01)

(52) Cooperative Patent Classification (CPC):
**B60K 35/232; B60K 35/285; B60K 35/29;
G01C 21/365; G06V 20/582; G08G 1/09623;
G08G 1/09626; G08G 1/096811; G08G 1/096827;**
B60K 2360/166; B60K 2360/177; B60K 2360/178;
B60K 2360/1868; B60K 2360/31

(86) International application number:
**PCT/JP2020/048309**

(87) International publication number:
**WO 2021/132408 (01.07.2021 Gazette 2021/26)**

(54) **DISPLAY APPARATUS, MOVING BODY, DISPLAY METHOD, AND PROGRAM**

ANZEIGEVORRICHTUNG, BEWEGLICHER KÖRPER, ANZEIGEVERFAHREN UND PROGRAMM

APPAREIL D'AFFICHAGE, CORPS MOBILE, PROCÉDÉ D'AFFICHAGE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2019   JP 2019237140
07.12.2020   JP 2020203002**

(43) Date of publication of application:
**02.11.2022   Bulletin 2022/44**

(73) Proprietor: **Ricoh Company, Ltd.
Tokyo 143-8555 (JP)**

(72) Inventors:
• **SUZUKI, Yuuki
Tokyo 143-8555 (JP)**

• **YAMAGUCHI, Hiroshi
Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**DE-A1- 102013 016 242     DE-A1- 102014 214 713
DE-A1- 102015 209 004     US-A1- 2014 266 656
US-A1- 2019 359 228**

EP 4 081 421 B1

## Description

## Technical Field

The present invention relates to a display apparatus, a moving body, a display method, and a program.

## Background Art

A display apparatus, such as a head-up display, superimposes a virtual image of an indicator image for indicating various kinds of information on the scenery in front of the vehicle by projecting the indicator image onto the front windshield of the vehicle, so that the virtual image is visible to the driver of the vehicle.

For example, PTL 1 discloses a technique for recognizing traffic signs such as road signs, road surface markings, and the like in front of the vehicle on the basis of an image of the forward view from the vehicle obtained by a camera attached to the vehicle and superimposing virtual images of traffic sign icon images at positions of the road that are visible in the forward view, so that the road to which the traffic signs are applied are displayed to the driver of the vehicle.

Furthermore, DE 10 2014 214713 A1 discloses a method including acquiring an image by a camera of an assistance system. A traffic sign is determined within the captured image. An orientation of the particular traffic sign with respect to a vehicle is determined. A display device of the assistance system is actuated depending on the orientation. A position of the traffic sign is determined with respect to the vehicle. The orientation of the particular traffic sign is determined from a perspective distortion.

DE 10 2015 209004 A1 discloses a driver assistance system having a camera configured to acquire traffic signs in front of the vehicle, a controller configured to identify the target path and the driving lanes in front of the vehicle and a head-up display configured to display the traffic sign icons superimposed on the road in front of the vehicle.

## Citation List

## Patent Literature

[PTL 1] Japanese Unexamined Patent Application Publication No. 2018-200626

## Summary of Invention

## Technical Problem

However, according to the technique of PTL 1, in a case where a path such as a road to which a traffic sign is applied or the traffic sign is visually recognized in proximity to an edge portion and the like of the forward view, the display apparatus is required to project a wide-angle view in order to superimpose virtual images of predetermined images, such as traffic sign icon images, at positions of traffic signs in the forward view. As a result, the size and the cost of the display apparatus may increase.

It is an object of the present disclosure to be able to display a path to which a traffic sign is applied or display the traffic sign even when projecting a narrow-angle view.

## Solution to Problem

According to a first aspect of the invention, a display apparatus for being mounted on a moving body and for displaying a virtual image of a projection image to a driver of the moving body is provided. The display apparatus includes an image processing apparatus configured to execute image processing on an image of a forward view from the moving body and to output position information, an identification unit configured to obtain a traffic sign icon image based on a sign image received from the image processing apparatus. The display apparatus further includes an image generation unit configured to generate the projection image including a predetermined image obtained based on a traffic sign, and a direction indication unit configured to output either an indication direction in which a target path, to which the traffic sign is applied, is present or an indication direction in which the traffic sign is present, based on a position of the traffic sign and a position of a path in front of a moving body, and to cause the image generation unit to generate the projection image including the indication direction.

The indication direction indicates a direction in which the target path or the traffic sign is present with respect to a reference position. The image generation unit is configured to generate the projection image of a predetermined image size with the reference position being adjusted with respect to a forward image such that a traffic sign icon image is arranged in the direction of the indication direction with respect to the reference position.

According to another aspect of the invention a display method is defined for causing a display apparatus to display a virtual image of a projection image to a driver of a moving body. The method comprises obtaining a predetermined image obtained based on a traffic sign; causing an image generation unit to generate the projection image including the predetermined image; and causing a direction indication unit to output either an indication direction in which a target path, to which the traffic sign is applied, is present or an indication direction in which the traffic sign is present, the indication direction being determined based on a position of the traffic sign and a position of a path in front of the moving body; and causing the image generation unit to generate the projection image including the indication direction, the indication direction indicating a direction in which the target path or the traffic sign is present with respect to a reference position, wherein the projection image of a predetermined image size is generated with the reference position being adjusted with respect to a forward image such that a traffic sign icon image is arranged in the direction of the indication direction with respect to the reference position.

**Advantageous Effects of Invention**

A path to which a traffic sign is applied or the traffic sign can be displayed even when projecting a narrow-angle view.

**Brief Description of Drawings**

Fig. 1 is a drawing illustrating in which a display apparatus according to a first embodiment is mounted on a vehicle.

Fig. 2 is a drawing illustrating a configuration example of a projection unit.

Fig. 3 is a block diagram illustrating an example of configuration of an in-vehicle system in which the display apparatus is mounted on a vehicle.

Fig. 4 is a block diagram illustrating an example of configuration of a detection apparatus.

Fig. 5 is a block diagram illustrating an example of a functional configuration of an image processing apparatus.

Fig. 6 is a block diagram illustrating an example of a hardware configuration of a control unit according to the embodiment.

Fig. 7 is a block diagram illustrating an example of a functional configuration of the control unit according to a first embodiment.

Fig. 8 is a flowchart illustrating an example of processing of the control unit according to the first embodiment.

Fig. 9 is a drawing illustrating an example of a forward image.

Fig. 10 is a drawing illustrating an example of a projection image.

Fig. 11 is a drawing illustrating an example of a forward view of a vehicle according to the first embodiment.

Fig. 12 is a drawing illustrating an example of a forward view that has changed from the state of Fig. 11 as a result of movement of the vehicle.

Fig. 13 is a drawing for explaining an increase in the angle of view of the projection unit.

Fig. 14 is a drawing illustrating an example of functional configuration of a control unit according to a second embodiment.

Fig. 15 is a flowchart illustrating an example of processing of the control unit according to the second embodiment.

Fig. 16 is a drawing illustrating an example of a forward view of a vehicle according to the second embodiment.

Fig. 17 is a drawing illustrating an example of a forward view that has changed from the state of Fig. 16 as a result of movement of the vehicle.

**Description of Embodiments**

Hereinafter, modes for carrying out the invention are explained with reference to drawings. In the drawings, similar constituent elements are denoted with the same reference numerals, and repeated description thereabout may be omitted.

A display apparatus according to an embodiment superimposes a virtual image of a projection image including various kinds of information on a front windshield and the like, so that the virtual image is visible to the driver of a moving body such as a vehicle.

In addition, the display apparatus according to the embodiment generates a projection image including a predetermined image such as a traffic sign icon image obtained based on a traffic sign, and displays, to the driver, an indication direction in which either a target path to which the traffic sign is applied or the traffic sign is present, on the basis of a position of the traffic sign and a position of a path in front of the moving body.

Because the display apparatus according to the embodiment displays the direction, it is not necessary to increase the angle of view of projection to superimpose a virtual image of a predetermined image such as a traffic sign icon image at a position of the target path that are visible in a forward view. Therefore, even when the angle of view of projection of the display apparatus is small, either the target path or the traffic sign can be displayed.

<Explanation of terms used in embodiments>

(Image)

An image includes both of a still image and a moving image. The image is assumed to include a video.

(Forward scenery)

The forward view refers to the scenery in front of a moving body that is visible to the driver of the moving body. For example, the scenery in front of the moving body seen by the driver through the front windshield of the moving body corresponds to the scenery in front of the vehicle.

(Driver)

The driver refers to the person who drives or operates the moving body. For example, the driver is a driver who drives the vehicle.

(Traffic sign)

The traffic sign is a sign that provides information with regard to traffic to a person who uses the road such as the driver of a vehicle. The traffic sign includes a display member for displaying information, an image for displaying information, a marking for displaying information, or the like. Specifically, traffic signs may include road signs, road surface markings, or the like. The road sign may be a signboard disposed in proximity to or above a road to provide information with regard to traffic to a person who uses the road such as a driver of a vehicle. The road surface marking is a marking on the road surface for providing information for the purpose of control, guidance, or regulation of traffic. The traffic sign includes a figure, a symbol, characters and the like defined in advance according to information to be provided.

(Moving body)

The moving body refers to an object that can move. Examples of moving bodies include: land moving bodies capable of moving on the land, such as an automobile, a vehicle, a train, a locomotive, and a forklift; air moving bodies capable of moving in the air, such as an airplane, a balloon, and a drone; and water moving bodies capable of moving on the water, such as a ship, a vessel, a steamship, and a boat.

(Path)

The path refers to a road, a route, a trace, or a direction in which a moving body moves. Examples of paths include traffic routes, traveling directions, cruising directions, and the like, and include roads, aisles, passages, roadways, and railroad tracks, on which the land moving bodies move; an airway and an air route along which the air moving bodies move; and a waterway, a sea route or a watercourse in which the water moving bodies move.

(Virtual sign image)

The traffic sign icon image refers to an image of a virtual traffic sign. In other words, the traffic sign icon image is an image for displaying either a figure corresponding to a figure displayed by a traffic sign or characters corresponding to characters displayed by a traffic sign, or displaying both the figure and the characters. For example, if the traffic sign is a "Do Not Enter" sign, an image of the same pattern as that displayed by the "Do Not Enter" sign corresponds to the traffic sign icon image.

(Projection image)

The projection image refers to a projected image that is visible to the driver. The projection image includes traveling speed information about the vehicle, information to be provided to the driver such as traffic sign icon images, and the like.

(Predetermined image)

The predetermined image refers to an image included in the projection image. For example, the predetermined image is a character image and the like including characters substituted for the traffic sign icon image and the traffic sign.

(Predetermined position)

The predetermined position refers to a position at which the predetermined image is arranged in the projection image in a case where, as a result of movement of the moving body, the traffic sign moves out of the forward view and information about the traffic sign is no longer obtained.

(Target path)

The target path refers to the path to which information indicated by a traffic sign is applied. For example, if a traffic sign indicates that the speed limit of the road is 60 km/h, i.e., a path along which an automobile moves, the target path is the road to which a speed limit of 60 km/h is applied. In this case, the road is referred to as the target road. The target road is an example of a target path.

(Indicated direction)

The indication direction refers to the direction in which either the target path or the traffic sign is present as seen from the driver.
Hereinafter, an embodiment is described with reference to a head-up display (HUD) mounted on a vehicle capable of moving on a road. In this case, the road is an example of a path, the vehicle is an example of a moving body, and the HUD is an example of a display apparatus.

<Example of configuration of first embodiment>

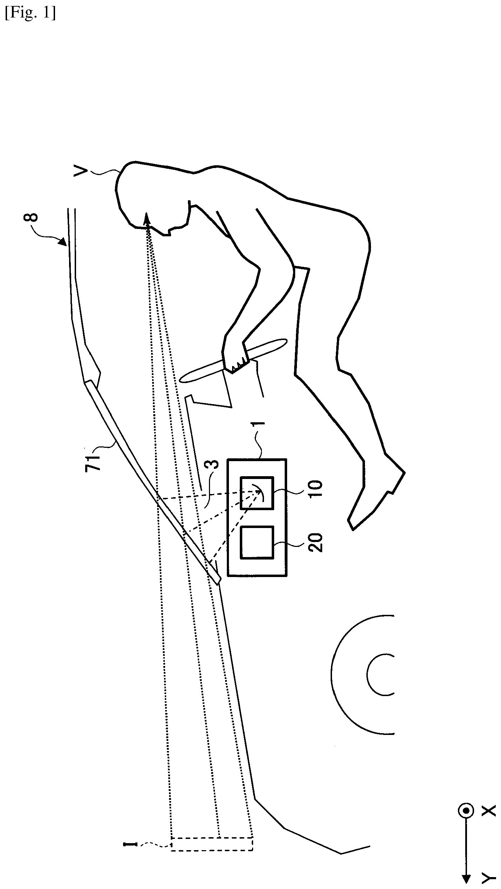

Fig. 1 is a drawing illustrating an example of a configuration in which a display apparatus 1 according a first embodiment is mounted on a vehicle 8. As illustrated in Fig. 1, the display apparatus 1 includes a control unit 20 and a projection unit 10.
The display apparatus 1 is embedded in the dashboard of the vehicle 8. The display apparatus 1 emits an image toward a front windshield 71 through an emission window 3 on the upper surface of the display apparatus 1. The projection image is displayed as a virtual image I in a positive Y direction with respect to the front windshield 71 and is visible to the driver V of the vehicle 8. By seeing the virtual image I, the driver V can obtain information useful for driving with less eye movement while the driver V keeps his or her eyes on other vehicles, the road surface, and the like located in positive the Y direction with respect to the vehicle 8.

The display apparatus 1 may be installed on the ceiling or a sun visor in addition to the dashboard, as long as the image can be projected on the windshield 71.

As illustrated in Fig. 1, the display apparatus 1 includes, as main constituent elements, a projection unit 10 and a control unit 20. The projection unit 10 projects an image toward the front windshield 71. A laser scanning method and a panel method are known as image projection methods for the projection unit 10. The laser scanning method is a method for scanning a laser beam emitted from a laser light source with a two-dimensional scanning device to form an intermediate image (a real image projected on a screen described later). The panel method is a method for forming an intermediate image with an imaging device such as a liquid crystal panel, a Digital Micro-mirror Device (DMD) panel, or a vacuum fluorescent display (VFD). The projection image includes both a projection image projected by the laser scanning method and a projection image projected by the panel method.

Unlike the panel method for forming an image by causing the entire screen to emit light and partially shielding light, the laser scanning method can assign emission and non-emission to each pixel, and therefore, the laser scanning method is generally advantageous in capable of forming an image with a high contrast. It has been found that an HUD of the laser scanning method allows passengers of the vehicle to see information with less attention resources than an HUD of the panel method because the HUD of the laser scanning method improves the visibility by attaining the high contrast.

In particular, with the panel method, light that cannot be completely shielded is projected even on an area that does not have information, and a display frame is projected within the range in which the HUD can display images (this phenomenon is referred to as a postcard). With the laser scanning method, this phenomenon is not observed, and only the content can be projected. In particular, in augmented reality (AR) in which generated images are displayed on top of an existing landscape, the reality is improved.

The augmented reality is a technique for virtually augmenting the world in front of a person by displaying images of non-existent objects on top of existing landscapes. For the augmented reality, an HUD of the panel method may be adopted as long as the HUD can display information in a manner that can be visually recognized with less attention resources (giving less fatigue).

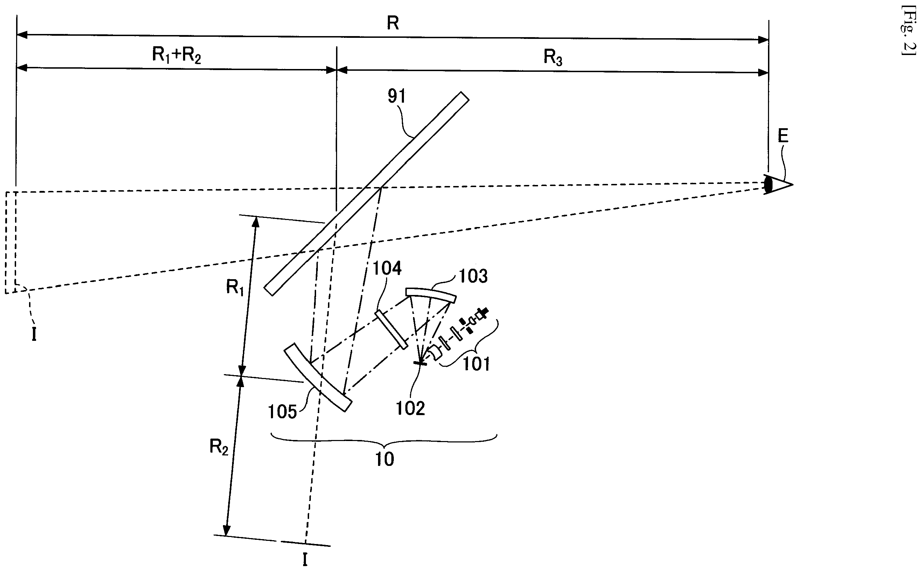

Fig. 2 is a drawing illustrating an example of configuration of the projection unit 10. The projection unit 10 mainly includes a light source unit 101, an optical deflector 102, a mirror 103, a screen 104, and a concave mirror 105. Note that Fig. 2 only illustrates main constituent elements, and constituent elements other than those illustrated in Fig. 2 may be provided, or some of the constituent elements illustrated in Fig. 2 do not have to be provided.

The light source unit 101 includes three laser light sources (hereinafter assumed to be laser diodes (LDs)) corresponding to Red(R), Green(G), and Blue(B), a coupling lens, an aperture, a combining element, lenses, and the like. The light source unit 101 is configured to combine the laser beams emitted from the three LDs and guides the laser beams toward the reflection surface of the optical deflector 102. The laser beam guided to the reflecting surface of the optical deflector 102 is deflected two-dimensionally by the optical deflector 102.

As the optical deflector 102, for example, a micromirror that oscillates with respect to two orthogonal axes, or two micromirrors that each oscillate or rotate with respect to one axis can be used. The optical deflector 102 can be, for example, a MEMS (Micro Electro Mechanical Systems) mirror manufactured by a semiconductor process or the like. The optical deflector 102 can be driven by, for example, an actuator that uses the deformation force of the piezoelectric element as a driving force. As the optical deflector 102, a galvanometer mirror or a polygon mirror may be used.

The laser beam two-dimensionally deflected by the optical deflector 102 enters the mirror 103 to be reflected by the mirror 103, and renders a two-dimensional image (intermediate image) on the surface (scanned surface) of the screen 104. For example, a concave mirror can be used as the mirror 103, but a convex mirror or a plane mirror may be used. By deflecting the direction of the laser beam with the optical deflector 102 and the mirror 103, the projection unit 10 can be downsized or the arrangement of the constituent elements can be flexibly changed.

The screen 104 is preferably a microlens array or a micromirror array that has the function of diverging the laser beam at a desired divergence angle, but may also be a laser diffusing plate for diffusing the beam, a transmission plate or a reflecting plate with smooth surface, and the like. Generally, the constituent elements from the light source unit 101 to the screen 104 are collectively referred to as an HUD apparatus. However, the HUD apparatus may include other components.

The laser beam emitted from the screen 104 is reflected by the concave mirror 105 and projected onto the front windshield 71. The concave mirror 105 has a function similar to that of a lens, and forms an image at a predetermined focal length. Therefore, if the concave mirror 105 were be a lens, the image on the screen 104 corresponding to the object would form an image at a position of a length $R_2$ according to the focal length of the concave mirror 105. Therefore, when viewed from an occupant such as the driver V of the vehicle 8, the virtual image I is displayed at the position of the length $R_1+R_2$ from the front windshield 71. Where the length from a driver V of the vehicle 8 to the front windshield 71 is denoted as R3, the virtual image I is displayed (formed) at the position of a length R $(=R_1+R_2+R_3)$ from a viewpoint

E of the driver V of the vehicle 8 in Fig. 2.

At least a part of the light flux to the front windshield 71 is reflected toward the viewpoint E of the driver V of the vehicle 8. As a result, the driver V of the vehicle 8 can visually recognize, through the front windshield 71, the virtual image I acquired by enlarging the intermediate image on the screen 104. That is, the virtual image I which is an enlarged intermediate image is displayed through the front windshield 71 as viewed from the driver V of the vehicle 8.

Normally, the front windshield 71 is not flat but is slightly curved. For this reason, a length R is substantially determined by the length $R_1+R_2$ as described above, although the imaging position of the virtual image I is affected not only by the focal length of the concave mirror 105 but also by the curved surface of the front windshield 71. In order to form the virtual image I far away so as to reduce the eye movement, the length $R_1$ or $R_2$ is increased. One way to increase the length $R_1$ is to use a mirror to turn the optical path, and another way to increase the length $R_2$ is to adjust the focal length of the concave mirror 105.

It should be noted that due to the front windshield 71, an optical distortion occurs in which the horizontal line of the intermediate image has an upward or downward convex shape. Therefore, it is preferable that at least one of the mirror 103 and the concave mirror 105 is designed and arranged so as to correct the distortion. Alternatively, it is preferable that the projection image is corrected in consideration of the distortion.

Further, a combiner may be arranged as a transmission and reflection member at the side of the viewpoint E with respect to the front windshield 71. Even where the light from the concave mirror 105 is emitted to the combiner, information can be displayed as a virtual image I in a manner similar to the case where the light from the concave mirror 105 is emitted onto the front windshield 71.

<Example of configuration of in-vehicle system 2 having display apparatus 1>

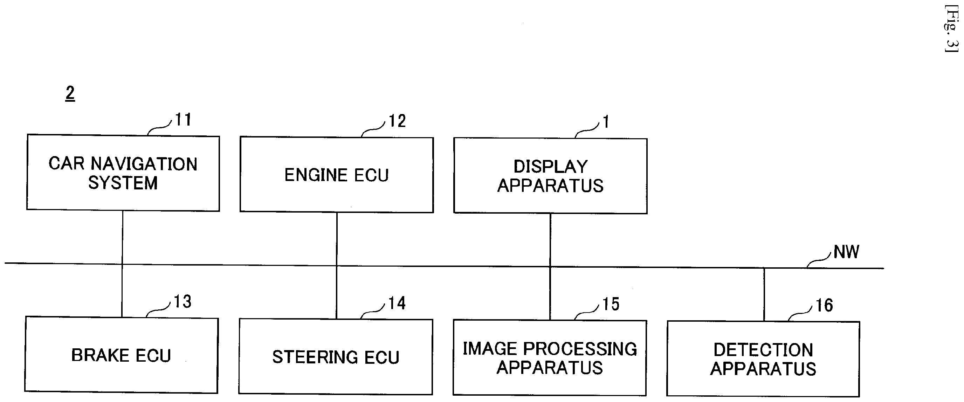

Next, the in-vehicle system 2 in which the display apparatus 1 is mounted on the vehicle 8 is explained with reference to Fig. 3. Fig. 3 is a block diagram illustrating an example of configuration of the in-vehicle system 2 in which the display apparatus 1 is mounted on the vehicle 8.

The in-vehicle system 2 includes a car navigation system 11 that communicates via an in-vehicle network NW such as a CAN (Controller Area Network) bus, an engine ECU (Electronic Control Unit) 12, a display apparatus 1, a brake ECU 13, a steering ECU 14, an image processing apparatus 15, and a detection apparatus 16.

The car navigation system 11 has a Global Navigation Satellite System (GNSS) such as a GPS (Global Positioning System), detects the current location of the vehicle 8, and displays the position of the vehicle 8 on an electronic map.

The car navigation system 11 also receives inputs of the starting point and the destination, searches a route from the starting point to the destination, displays the route on the electronic map, and provides guidance about the direction of travel to the occupant of the vehicle 8 by voice, text, animation (displayed on the display), or the like, before making a turn. The car navigation system 11 may communicate with a server via a cell network or the like. In this case, the server can send the electronic map to the vehicle 8 or perform a route search.

The engine ECU 12 determines an ideal fuel injection amount, advances or retards the ignition timing, controls the valve actuation mechanism, and the like according to the information from the sensors and the vehicle situations. Also, the engine ECU 12 determines whether to shift the gear by, e.g., referring to a map defining a shifting line for a gear with respect to a relationship between the current vehicle speed and the throttle opening. The engine ECU 12 performs the combinations of the above to perform acceleration and deceleration control for adaptive cruise control to follow a preceding ahead. Together with the engine or without using the engine as the power source, an electric motor may be used as a power source.

The brake ECU 13 controls the braking force for each of the wheels of the vehicle even when the brake pedal is not operated by the driver V of the vehicle 8. Examples of such controls performed by the brake ECU 13 include ABS (Antilock Braking System) control, braking control in adaptive cruise control for following a preceding ahead, pre-crash braking based on TTC (Time To Collision) with an obstacle, hill-start assist control for holding the brake when the vehicle starts on a slope, and the like.

The steering ECU 14 detects the steering direction and the steering amount of the steering wheel operated by the driver V of the vehicle 8, and performs power steering control for adding a steering torque in the steering direction. Even when the driver V of the vehicle 8 does not perform steering, the steering ECU 14 performs steering in a direction to avoid departure from a travelling lane, in a direction to maintain travelling at the center of the travelling lane, or in a direction to avoid approaching an obstacle.

The detection apparatus 16 is equipped with various sensors such as a forward camera 164, and can perform various detections such as capturing forward images of the vehicle 8. In this case, the position and the inclination of the forward camera 164 is adjusted and attached to the vehicle 8 so that the forward image corresponds to the forward view seen through the front windshield 71 by the driver V.

An image processing apparatus 15 executes image processing on the image of the forward view from the vehicle 8 captured by the forward camera 164, obtains information used for generating the projection image, and outputs the information to the display apparatus 1.

<Example of configuration of detection apparatus 16>

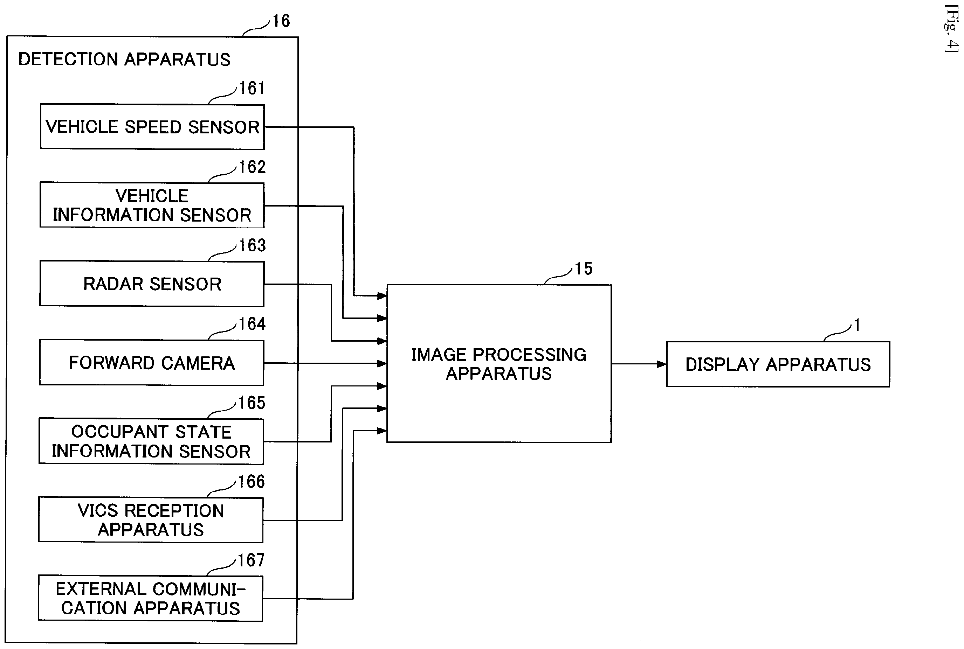

Next, the configuration of the detection apparatus 16 is explained with reference to Fig. 4. Fig. 4 is a block diagram illustrating an example of configuration of the detection apparatus 16. The detection apparatus 16 includes a vehicle speed sensor 161 for detecting the vehicle speed to be displayed by the display apparatus 1, a vehicle information sensor 162 configured to acquire vehicle information to be displayed by the display apparatus 1, a radar sensor 163 and a forward camera 164 for detecting obstacles, an occupant state information sensor 165 for acquiring occupant state information which is information about occupants, a VICS (Vehicle Information and Communication System Center, registered trademark) reception apparatus 166 for receiving traffic jam information from outside, and an external communication apparatus 167 for connection with the Internet and the like.

It should be noted that the sensors included in the detection apparatus 16 do not have to be provided in a concentrated manner in the detection apparatus 16, but may be provided in any manner as long as these sensors are mounted on the vehicle.

The vehicle speed sensor 161 detects a magnet that rotates with the rotation of the shaft of the drive train system with a sensor unit fixed to the vehicle body, and generates a pulse wave proportional to the rotation speed. The vehicle speed can be detected by the number of pulses per unit time.

The vehicle information sensor 162 has one or more sensors that detect vehicle information other than the vehicle speed sensor 161. Examples of such sensors include a fuel gauge sensor, a shift lever position sensor, an odometer, a trip meter, a turn signal sensor, a water temperature sensor, and the like. These sensors may acquire pieces of vehicle information with a generally-available structure. The fuel gauge sensor detects the amount of fuel remaining.

The shift lever position sensor detects the shift lever position operated by the driver V of the vehicle 8. The odometer accumulates the travelling distances of the vehicle 8, and provides the total travelling distance. The trip meter provides the distance traveled since the driver V of the vehicle 8 last initialized the trip meter.

The turn signal sensor detects the direction of the turn signal operated by the driver V of the vehicle 8. The water temperature sensor detects the temperature of the engine coolant. These are merely examples of information that can be acquired from the vehicle 8, and other information that can be acquired from the vehicle can be adopted as the vehicle information. For example, in an electric vehicle or a hybrid vehicle, the remaining amount of battery, the amount of regenerative power, or the amount of power consumption can also be acquired.

The forward camera 164 is an image-capturing device that captures images in front of the vehicle 8 (i.e., a direction corresponding to the positive Y direction in Fig. 1). The forward camera 164 is attached to the back of a rearview mirror or a portion in proximity thereto.

The forward camera 164 may be a monocular camera or a stereo camera. In the case of a monocular camera or a stereo camera that can acquire distance information, the radar sensor 163 may be omitted. However, when the radar sensor 163 is provided in addition to the forward camera 164 that can acquire distance information, the distance information acquired by the forward camera 164 and the distance information acquired by the radar sensor 163 may be combined (integrated), and highly accurate distance information can be acquired by complementing the disadvantages of each other. In addition to the radar sensor 163 and the forward camera 164, a sonic sensor (ultrasonic sensor) may be provided.

The radar sensor 163 transmits radio waves to the surroundings of the vehicle 8, such as the front, sides, and rear of the vehicle 8, and receives the radio waves reflected and returned by the object. The radar sensor 163 may be arranged at such locations that the radar sensor 163 can detect obstacles around the vehicle 8. The radar sensor 163 may use a TOF (Time of Flight) method to detect the distance to an object according to the time from transmission to reception, and detect the direction of the object according to the emission direction of the radar.

A LIDAR (Light Detection and Ranging, Laser Imaging Detection and Ranging) device is known as a radar sensor of the TOF method. In addition, the FMCW method (Frequency Modulation Continuous Wave) generates a mixed wave of the reception wave and the transmission wave while continuously increasing the frequency of the transmission wave, and converts the beat frequency of the mixed wave generated from slightly different frequencies into a distance. In the FMCW method, the direction of the object is estimated by detecting the phase shift of the reception waves with multiple reception antennas.

The occupant state information sensor 165 is a sensor that detects the occupant state information detected directly or indirectly from the occupant of the vehicle 8. A typical example of the occupant state information sensor 165 is a face camera. The face camera captures images of the face of the occupant of the vehicle 8 and performs face authentication to identify or distinguish the occupant of the vehicle 8. The face direction and the gaze direction can be detected from the face image.

In addition, the occupant state information sensor 165 may be, for example, an electrocardiograph sensor, a heart rate sensor, a blood pressure sensor, a body temperature sensor, a pulse sensor, a respiratory sensor, a sweat sensor, a blink sensor, a pupil sensor, a brain wave sensor, or a myoelectric potential sensor. The occupant state information sensor 165 may be, for example, in such a form that the occupant of the vehicle wears a wristwatch-type wearable terminal (a smart watch).

The VICS reception apparatus 166 receives radio waves distributed by VICS. The VICS is a system that transmits road traffic information about, e.g., traffic congestion and traffic regulations, to the in-vehicle apparatus in real time using FM multiplex broadcasting and beacons. The external communication apparatus 167 is connected to the Internet via a network such as 3G, 4G, 5G, LTE, or wireless LAN, to receive various kinds of information. For example, the external communication apparatus 167 can receive weather information such as rainfall, snowfall, and fog.

Also, the external communication apparatus 167 may receive news, music, video, and like. Further, the external communication apparatus 167 can acquire, for example, the state information about a traffic light and the time it takes for the traffic light to change. As described above, the VICS reception apparatus 166 and the external communication apparatus 167 may perform road-to-vehicle communication. In addition, the external communication apparatus 167 may acquire information detected by other vehicles 6 through inter-vehicle communication.

The advanced driver-assistance systems (ADAS) not only displays and warns the information, but also controls the vehicle 8. In this case, the ECU performs various driving support in cooperation with the engine ECU 12, the brake ECU 13, and the steering ECU 14 based on the distance information about an obstacle detected by at least one of the radar sensor 163 and the forward camera 164. For example, the ECU performs acceleration and braking control in adaptive cruise control for following a preceding ahead, pre-crash braking, avoidance of departure from a travelling lane, lane keep cruising, and hill-start assist control for holding the brake when the vehicle starts on a slope, steering for avoiding an obstacle, and the like. For such control, the ECU recognizes road signs and road paints such as white lines from an image captured by the forward camera 164.

In acceleration and deceleration control during adaptive cruise control, the ECU controls the driving power and the braking force to maintain the target distance according to vehicle speed. In the pre-crash braking, depending on the TTC, a warning and a display prompting the driver to press the brake pedal are displayed, and, if the possibility of collision is high, the seat belt is tightened and collision avoidance braking is activated. In avoidance of departure from a travelling lane, the driving assistance ECU 36 recognizes white lines (i.e., separation lines between neighboring lanes) from a captured image, and adds a steering torque in a direction opposite to the direction of departing from a travelling lane.

In lane keeping cruising, the center of a travelling lane is set as a target travelling line, and a steering torque proportional to a departure from the target travelling line is applied in the direction opposite to the departure. In the obstacle avoidance steering, in a case where it is determined that a collision cannot be avoided by braking, a travelling line for avoiding an obstacle is determined, and a steering torque for travelling along the travelling line is applied.

Also, for example, in a case where, when it is attempted to make a lane change, the radar sensor 163 or the forward camera 164 detects a vehicle cruising in an area (i.e., a blind spot) of a neighboring lane that cannot be seen with the door mirror, a warning is given to the occupant. Such a support is referred to as a blind spot monitor.

<Example of functional configuration of image processing apparatus 15>

Next, a functional configuration of the image processing apparatus 15 is explained. The image processing apparatus 15 executes processing to calculate and obtain position information about the road, traffic signs, and the like in front of the vehicle 8 and to output the position information to the display apparatus 1.

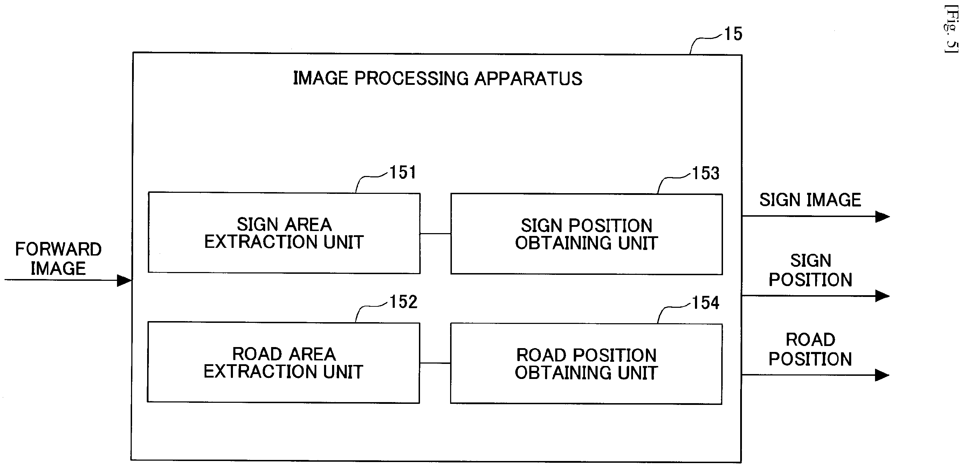

Fig. 5 is a block diagram illustrating an example of a functional configuration of the image processing apparatus 15. As illustrated in Fig. 5, the image processing apparatus 15 includes a sign area extraction unit 151, a road area extraction unit 152, a sign position obtaining unit 153, and a road position obtaining unit 154.

The sign area extraction unit 151 extracts, as a sign image, an image area including a traffic sign from the image of the forward view from the vehicle 8, and outputs the sign image to the sign position obtaining unit 153. The road area extraction unit 152 extracts, as a road image, an image area including a road from the image of the forward view from the vehicle 8, and outputs the road image to the road position obtaining unit 154. Image processing, such as pattern matching and edge detection, can be applied to the extraction of the sign image and the road image. When multiple roads and multiple signs are included in the forward image, a sign image is extracted for each of the multiple signs, and a road image is extracted for each of the multiple roads. Note that the sign image contains coordinate information that represents the position of the sign image in the forward image, and the road image contains coordinate information that represents the position of the road image in the forward image.

One of the methods by which the sign area extraction unit 151 and the road area extraction unit 152 extracts image areas is an image recognition method using machine learning. The machine learning is a technology that allows a computer to acquire learning ability like a human, and allows the computer to autonomously generate an algorithm used for determination, such as data identification, from learning data given in advance and to apply the learned algorithm to perform prediction with regard to new data.

The learning method for machine learning may be any one of supervised learning, unsupervised learning, semi-supervised learning, reinforcement learning, and deep learning, and may be a learning method acquired by combining these learning methods, and the learning method for machine learning is not limited. The methods of machine learning include a perceptron, deep learning, support vector machine, logistic regression, naive Bayes, decision tree, and random forest.

The sign position obtaining unit 153 obtains, as coordinate information, the position information about the traffic sign from the image of the forward view from the vehicle 8 on the basis of the sign image. The road position obtaining unit 154 obtains, as coordinate information, the position information about the road from the image of the forward view from the vehicle 8 on the basis of the road image. When multiple roads and multiple signs are included in the forward image, position information is obtained for each of the multiple roads and the multiple signs.

The image processing apparatus 15 outputs, to the display apparatus 1, the sign image extracted by the sign area extraction unit 151, the position information about the traffic sign obtained by the sign position obtaining unit 153, and the position information about the road obtained by the road position obtaining unit 154.

When any traffic sign is not included in the forward image, the image processing apparatus 15 outputs sign-absence information indicating the absence of a traffic sign, such as coordinates (0, 0), as information of the sign position. Also, the image processing apparatus 15 may output the road-absence information when the road is no longer included in the forward image.

<Hardware configuration example of control unit 20>

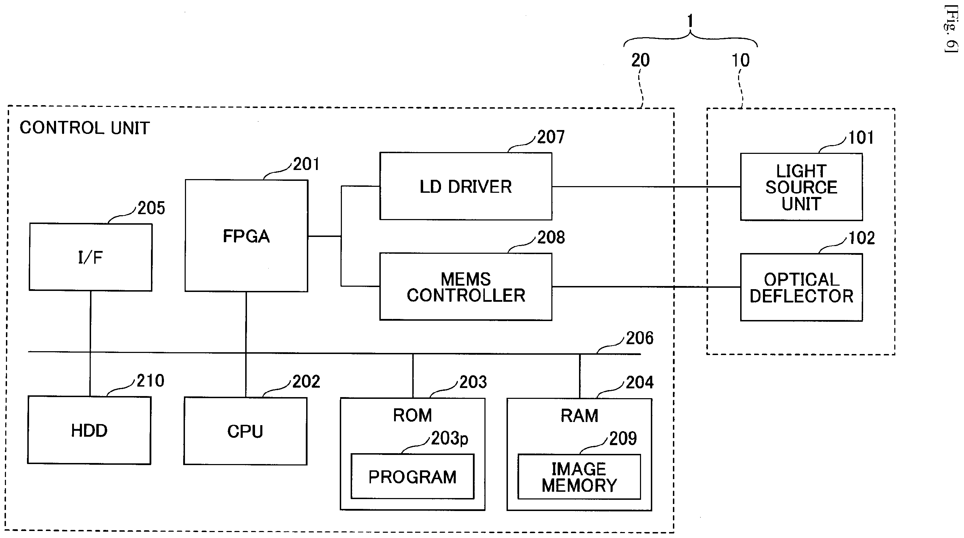

Next, a hardware configuration of the control unit 20 is explained with reference to Fig. 6. Fig. 6 is a drawing illustrating an example of a hardware configuration of the control unit 20. As illustrated in Fig. 6, the control unit 20 includes a field-programmable gate array (FPGA) 201, a central processing unit (CPU) 202, a read only memory (ROM) 203, a random access memory (RAM) 204, an interface (I/F) 205, a bus line 206, a laser diode (LD) driver 207, an MEMS controller 208, and a hard disk drive (HDD) 210. The FPGA 201, the CPU 202, the ROM 203, the RAM 204, the interface 205, and the HDD 210 are electrically connected with each other via the bus line 206.

The CPU 202 controls each of the functions of the control unit 20. The ROM 203 stores a program 203p that the CPU 202 executes to control the functions of the control unit 20. The program 203p is stored in the RAM 204, and the CPU 202 uses the RAM 204 as a work area for executing the program 203p. The RAM 204 has an image memory 209.

The image memory 209 is used to generate an image projected as the virtual image I. The interface 205 is an interface for communicating with the image processing apparatus 15 and the detection apparatus 16, and is connected to a CAN (Controller Area Network) bus, an Ethernet (registered trademark), or the like of the vehicle 8, for example.

The HDD 210 is non-volatile memory of a large capacity that stores programs with which processing is executed by the control unit 20 and various data such as priority levels. Alternatively, the HDD 210 may be an SSD (Solid State Drive) or the like.

The FPGA 201 controls the LD driver 207 based on the image generated by the CPU 202. The LD driver 207 controls the light emission of the LD according to the image by driving the LD of the light source unit 101 of the projection unit 10. The FPGA 201 operates the optical deflector 102 of the projection unit 10 via the MEMS controller 208 so as to deflect the laser beam in the direction corresponding to the pixel position of the image.

<First embodiment>

<Example of functional configuration of control unit 20>

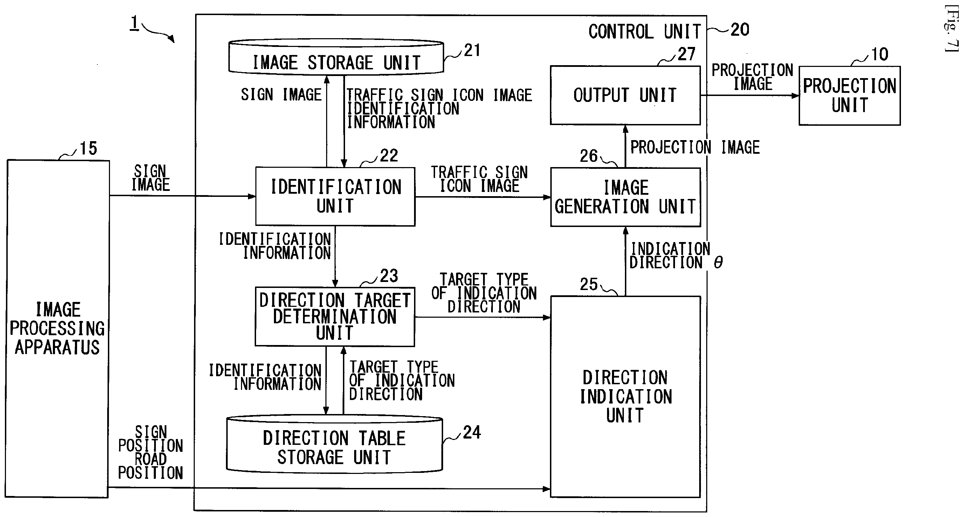

Next, the functional configuration of the control unit 20 according to the first embodiment is explained with reference to Fig. 7. Fig. 7 is a block diagram illustrating an example of a functional configuration of the control unit 20. As illustrated in Fig. 7, the control unit 20 includes an image storage unit 21, an identification unit 22, a direction target determination unit 23, a direction table storage unit 24, a direction indication unit 25, an image generation unit 26, and an output unit 27.

Among the above units of the control unit 20, the functions of the identification unit 22, the direction target determination unit 23, the direction indication unit 25, and the image generation unit 26 are implemented by causing the CPU 202 to execute a predetermined program. The functions of the image storage unit 21 and the direction table storage unit 24 are implemented by the HDD 210 and the like. The functions of the output unit 27 are implemented by the interface 205 and the like.

The image storage unit 21 is a database for storing traffic sign icon images corresponding to traffic signs. In addition, to each of the stored images of traffic signs, identification information for identifying the traffic sign is assigned. The traffic sign icon image may be an image of a small size, as long as, when the traffic sign icon image is placed in the projection image and the driver V sees the virtual image of the projection image, the driver V can visually recognize the traffic sign icon image.

The image storage unit 21 preferably stores images of all the traffic signs used in the road traffic at that time, but the embodiment is not limited thereto, and the image storage unit 21 may store only some of the traffic signs such as frequently used traffic signs. In addition, it is preferable that the stored images are updated on a regular basis in order to reflect the changes of the existing traffic signs and to reflect the addition of new traffic signs.

The stored images may be updated by downloading the latest data from the Internet or the like via the external communication apparatus 167. The update may be performed automatically on a regular basis, or the driver V of the vehicle 8 may operate the in-vehicle system 2 to manually update the stored images.

The identification unit 22 obtains a traffic sign icon image and identification information corresponding to a traffic sign indicated by a sign image by referring to the image storage unit 21 based on the sign image received from the image processing apparatus 15. As an example, a received sign image and an image of each of the traffic signs stored in advance in the image storage unit 21 are compared by pattern match processing, and an image with a similarity equal to or more than a predetermined threshold value is obtained as a traffic sign icon image. Also, the identification information attached to the obtained traffic sign icon image can be obtained.

The identification unit 22 outputs the obtained traffic sign icon image to the image generation unit 26, and outputs the obtained identification information to the direction target determination unit 23.

The direction target determination unit 23 determines, as an indication direction displayed to the driver V, either a direction in which a target road is present or a direction in which a traffic sign is present, on the basis of the identification information of the traffic sign received from the identification unit 22. In other words, either the target road or the traffic sign is determined as the target type of the indication direction. Then, the direction target determination unit 23 outputs information indicating the target type of the indication direction to the direction indication unit 25.

Specifically, the direction target determination unit 23 makes the above determination by referring to the direction table storage unit 24 storing a correspondence table indicating a correspondence between the identification information and the indication directions defined in advance, on the basis of the identification information of the traffic signs received from the identification unit 22.

For example, in cases of regulatory traffic signs indicating regulations on roads such as "Do Not Enter", "Stop", and the like, the target road is the target type of the indication direction. In cases of auxiliary traffic signs for calling for attention according to an ambient environment of a road such as a presence of a school in close proximity, a pedestrian crossing in close proximity, and the like, and complementing traffic regulations, the traffic sign is the target type of the indication direction. In a case of a traffic sign of a speed limit and the like, any of the target road and the traffic sign may be adopted as the target type of the indication direction, and a rule for adopting which of the target road and the traffic sign as the target road or the traffic sign is preferably defined in advance according to a setting configured by the manufacturer of the display apparatus 1, the manufacturer of the vehicle 8, the user of the display apparatus 1, or the like.

The direction indication unit 25 displays, to the driver V, an indication direction, i.e. either a direction in which the target road, to which the traffic sign is applied, is present or a direction in which the traffic sign is present, on the basis of the position of the traffic sign and the position of the road in front of the vehicle 8.

Specifically, the direction indication unit 25 receives the position information about each of the traffic sign and the road from the image processing apparatus 15, and receives information about the target type of the indication direction from the direction target determination unit 23.

In a case where the target type of the indication direction is the target road, the direction indication unit 25 determines, as the target road, the road to which the traffic sign is applied, on the basis of the position of the traffic sign and the position of the road in front of the vehicle 8. Then, the direction indication unit 25 uses a reference position defined in advance and the coordinate information of the target road to calculate and obtain, as an indication direction $\theta$, a direction in which the target road is present with respect to the reference position.

In contrast, in a case where the target type of the indication direction is the traffic sign, the direction indication unit 25 uses the coordinate information about the reference position and the traffic sign to calculate and obtain, as an indication direction $\theta$, a direction of the traffic sign with respect to the reference position.

In this case, the viewpoint (i.e., the eye) of the driver V or a position corresponding to the viewpoint can be used as the reference position. In this case, the direction in which the target road or the traffic sign is present as seen from the driver V corresponds to the indication direction.

The direction indication unit 25 outputs the indication direction $\theta$ to the image generation unit 26 to cause the image generation unit 26 to generate a projection image including the indication direction $\theta$, so that the indication direction $\theta$ is displayed to the driver V.

The image generation unit 26 generates a projection image including the traffic sign icon image arranged therein. Specifically, the image generation unit 26 generates the projection image of a predetermined image size with the reference position being adjusted with respect to the forward image such that a traffic sign icon image is arranged in the direction of the indication direction $\theta$ with respect to the reference position. The predetermined image size is preferably such an image size that the size of the virtual image of the projection image is smaller than the forward view so as to reduce the angle of view of projection to the front windshield 71 by the projection unit 10.

The arrangement of the traffic sign icon image in the projection image is executed by replacing an image area in the direction of the indication direction $\theta$ with respect to the reference position with the traffic sign icon image. The image generation unit 26 can arrange other information such as a vehicle speed indication in the projection image. Further, in a case where any traffic sign is not included in the forward image, the image generation unit 26 generates a projection image not including any traffic sign icon image.

The output unit 27 outputs image data of the projection image generated by the image generation unit 26 to the projection unit 10. Specifically, the output unit 27 controls the LD driver 207 and the MEMS controller 208 to cause the projection unit 10 to project a projection image generated by the image generation unit 26 to display the projection image as the virtual image.

<Example of processing of control unit 20>

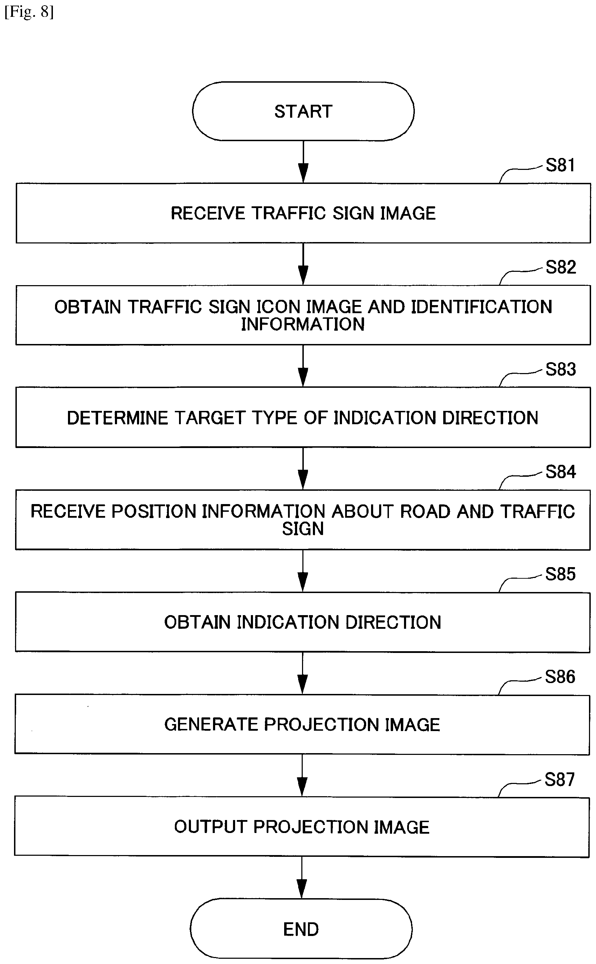

Next, a flow of processing by the control unit 20 is explained with reference to Fig. 8. Fig. 8 is a flowchart illustrating an example of processing by the control unit 20.

First, in step S81, the identification unit 22 receives a sign image from the image processing apparatus 15.

Subsequently, in step S82, the identification unit 22 obtains the traffic sign icon image and the identification information corresponding to the traffic sign indicated by the sign image by referring to the image storage unit 21 on the basis of the sign image of the traffic sign. Then, the identification unit 22 outputs the obtained traffic sign icon image to the image generation unit 26, and outputs the obtained identification information to the direction target determination unit 23.

Subsequently, in step S83, the direction target determination unit 23 determines, as the target type of the indication direction displayed to the driver V, either the target road or the traffic sign on the basis of the identification information about the traffic sign received from the identification unit 22. Then, the direction target determination unit 23 outputs information indicating the determined target type of the indication direction to the direction indication unit 25.

Subsequently, in step S84, the direction indication unit 25 receives the position information about each of the traffic sign and the road from the image processing apparatus 15. This step S84 may be performed at any point in time between steps S81 to S83 explained above.

Subsequently, in step S85, the direction indication unit 25 obtains either an indication direction in which the target road, to which the traffic sign is applied, is present or an indication direction in which the traffic sign is present. In a case where the target type of the indication direction is the target road, the direction indication unit 25 determines, as the target road, the road to which the traffic sign is applied, on the basis of the position of the traffic sign and the position of the road in front of the vehicle 8. Then, the direction indication unit 25 uses the reference position defined in advance and the coordinate information about the target road to calculate and obtain, as the indication direction θ, the direction in which the target road is present with respect to the reference position.

In contrast, in a case where the target type of the indication direction is the traffic sign, the direction indication unit 25 uses the coordinate information about the reference position and the traffic sign to calculate and obtain, as the indication direction θ, the direction of the traffic sign with respect to the reference position.

Therefore, the direction indication unit 25 outputs the indication direction θ to the image generation unit 26.

Subsequently, in step S86, the image generation unit 26 generates a projection image in which the traffic sign icon image is arranged in the direction of the indication direction θ with respect to the reference position.

Subsequently, in step S87, the output unit 27 outputs the image data of the projection image generated by the image generation unit 26 to the projection unit 10.

In this manner, the display apparatus 1 can generate the projection image for displaying, to the driver V, either an indication direction in which the target road, to which the traffic sign is applied, is present or an indication direction in which the traffic sign is present. In addition, the virtual image of the projection image generated by the projection unit 10 can be displayed.

The projection image is updated from time to time according to the forward image that changes as the vehicle 8 moves, and the virtual image of the updated projection image is superimposed on the forward view. In a case where any traffic sign is no longer included in the forward image, the virtual image of the projection image not including the traffic sign icon image is superimposed on the forward view.

<Examples of applications of first embodiment>

Next, examples of applications of the display apparatus 1 are explained with reference to specific examples of forward images, projection images, and forward sceneries in which projection images are superimposed.

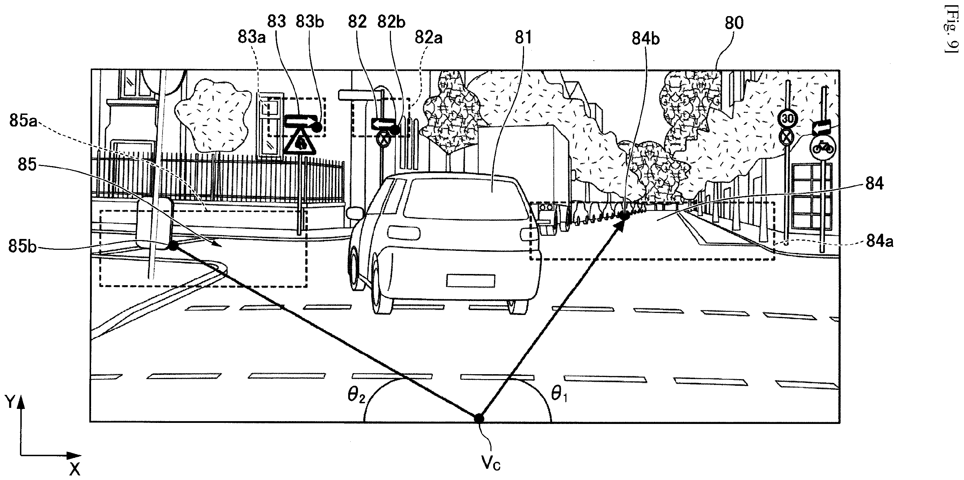

Fig. 9 is a drawing illustrating an example of a forward image 80 captured by the forward camera 164. The forward image 80 includes a preceding ahead 81, traffic signs 82 and 83, and roads 84 and 85. The traffic sign 82 is a road sign applied to the road 84. The traffic sign 83 is a road sign applied to the road 85.

The sign area extraction unit 151 in the image processing apparatus 15 extracts a sign image 82a including the traffic sign 82 and a sign image 83a including the traffic sign 83 from the forward image 80, and outputs the sign image 82a and the sign image 83a to the sign position obtaining unit 153. The road area extraction unit 152 extracts a road image 84a including the road 84 and a road image 85a including the road 85 from the forward image 80, and outputs the road image 84a and the road image 85a to the road position obtaining unit 154.

The sign position obtaining unit 153 obtains the coordinate information about the sign position 82b, i.e., the position of the traffic sign 82, from the sign image 82a. The sign position obtaining unit 153 obtains the coordinate information about the sign position 83b, i.e., the position of the traffic sign 83, from the sign image 83a. Such a sign position is, for example, the position of a pixel on the most positive side in the X direction and on the most negative side in the Y direction from among the pixels constituting the traffic sign in the sign image. The position of which pixel is adopted as the sign position is defined in advance.

Likewise, the road position obtaining unit 154 obtains the coordinate information about the road position 84b, i.e., the position of the road 84 in the road image 84a. Also, the road position obtaining unit 154 obtains the coordinate information about the road position 85b, i.e., the position of the road 85 in the road image 85a. Such a road position is, for example, a position corresponding to the center of gravity of the road image. Which pixel is to be adopted as the road position is defined in advance.

The identification unit 22 appropriately corrects the sign image 82a and the sign image 83a by applying preprocessing such as image rotation processing so as to allow the pattern matching processing to be easily executed. Thereafter, the identification unit 22 obtains the traffic sign icon image and the identification information by referring to the image storage unit 21 on the basis of the sign images 82a and 83a.

In the example of Fig. 9, the traffic signs 82 and 83 are traffic signs indicating one-way traffic, and accordingly, the identification unit 22 obtains a traffic sign icon image of one-way traffic as traffic sign icon images corresponding to the traffic signs 82 and 83. Alternatively, the identification unit 22 may obtain, as the traffic sign icon image corresponding to one-way traffic, a traffic sign icon image of "Do Not Enter" indicating that the vehicle cannot enter the road due to one-way traffic. A rule for obtaining such a traffic sign icon image is defined in advance.

The one-way traffic sign is a traffic regulation applied to the road, and accordingly, the direction target determination unit 23 determines that the target types of the indication directions of the traffic signs 82 and 83 are "target roads", on the basis of the identification information of the traffic signs 82 and 83 received from the identification unit 22.

In the forward image 80, the direction indication unit 25 determines, as the target road of the traffic sign 82, the road 84 that is at the shortest distance from the sign position 82b, and determines, as the target road of the traffic sign 83, the road 85 that is at the shortest distance from the sign position 83b. In the example of Fig. 9, the distance from the sign position 82b to the road 84 and the distance from the sign position 82b to the road 85 are about the same, but the road 84 is adopted as the target road of the traffic sign 82 in order to avoid overlappingly choosing the road 85 that is adopted as the target road of the traffic sign 83.

A reference position $V_C$ in Fig. 9 is a position corresponding to the viewpoint (i.e., the eyes) of the driver V. Where coordinates of the road position 84b are defined as $(X_1, Y_1)$, coordinates of the road position 85b are denoted as $(X_2, Y_2)$, and coordinates of the reference position $V_C$ are denoted as $(X_C, Y_C)$, the direction indication unit 25 calculates an indication direction $\theta_1$ of the road 84 and an indication direction $\theta_2$ of the road 85 according to the following expressions (1) and (2).

$$\theta_1 = \arctan \{(Y_1 - Y_C)/(X_1 - X_C)\} \ ... \ (1)$$

$$\theta_2 = \arctan \{(Y_2 - Y_C)/(X_2 - X_C)\} \ ... \ (2)$$

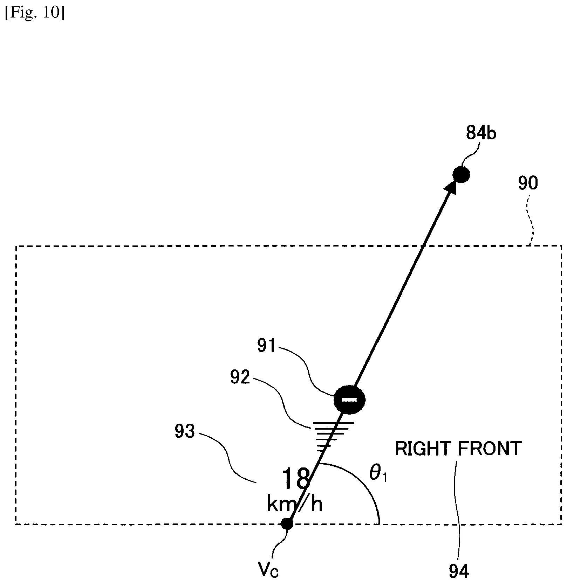

Fig. 10 is a drawing illustrating an example of a projection image 90 generated by the image generation unit 26. The projection image 90 includes a traffic sign icon image 91 arranged at the indication direction $\theta_1$ of the road 84 to which the traffic sign 82 is applied, a figure image 92, and a vehicle speed image 93 arranged at a predetermined position. In this case, the traffic sign icon image 91 is an example of a predetermined image.

The traffic sign icon image 91 is to virtually display a road sign of "Do Not Enter" indicating that the vehicle cannot enter due to one-way traffic. The figure image 92 is a figure image displaying the indication direction $\theta_1$. The vehicle speed image 93 is a character image indicating the vehicle speed of the vehicle 8 detected by the vehicle speed sensor 161. The vehicle speed image 93 is fixed at the predetermined position, and even when the vehicle 8 moves and the forward image changes, the position of the vehicle speed image 93 does not change. The vehicle speed image 93 is an example of a fixed image.

In the present embodiment, although the figure image 92 indicates a direction by displaying an arrow and a three-dimensional conical-shaped figure, the direction may be indicated in a manner different from the figure image 92, as long as the direction can be indicated. For example, a character image may be displayed to indicate the direction by displaying language such as "right", "front left", and the like. In this case, for example, instead of the arrow and the three-dimensional conical-shaped figure, or together with the arrow and the three-dimensional conical-shaped figure, the display apparatus 1 may display a character image including characters or language such as "right front", "right direction at angle of $\theta_1$ degrees with respect to the horizontal direction". The character image 94 displaying characters, "RIGHT FRONT", in Fig. 10 is an example of such a character image.

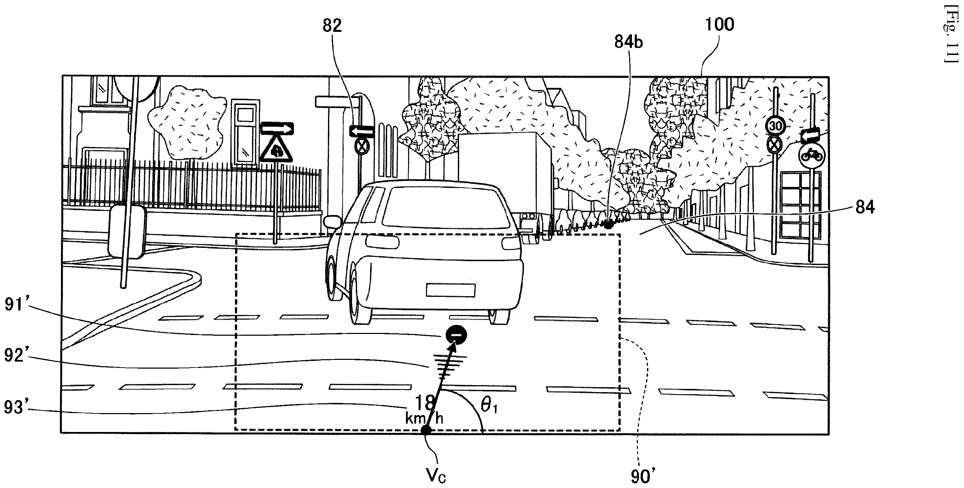

Next, Fig. 11 is a drawing illustrating an example of the forward view 100 of the vehicle 8 according to the present embodiment. The forward view 100 is an image that the driver V visually recognizes by seeing a virtual image 90' of the projection image 90 projected and superimposed by the display apparatus 1 onto the front windshield 71. As illustrated in Fig. 11, the size of the virtual image 90' is smaller than the forward view 100.

A traffic sign icon virtual image 91', i.e., a virtual image of the traffic sign icon image 91, and a figure virtual image 92', i.e., a virtual image of the figure image 92, are displayed in a direction along the indication direction $\theta_1$ of the road 84, i.e., the target road to which the traffic sign 82 is applied. Also, a vehicle speed virtual image 93', i.e., a virtual image of the vehicle speed image 93, is displayed at the predetermined position.

The traffic sign icon virtual image 91' corresponding to the traffic sign 82 is displayed in the direction along the indication direction $\theta_1$, so that the driver V can recognize the traffic sign 82 and the road 84 to which the traffic sign 82 is applied, without moving his or her eyes.

However, the traffic sign icon virtual image 91' does not have to be strictly displayed in the direction along the indication direction $\theta_1$, and as long as the driver V can recognize the direction in which the target road and the traffic sign are present, the traffic sign icon virtual image 91' may be displayed in a direction somewhat shifted from the indication direction $\theta_1$.

In this case, for example, when it is attempted to superimpose the traffic sign icon virtual image 91' or the figure virtual image 92' on the road 84 in the forward view 100, a virtual image larger than the virtual image 90' is desired, and the angle of view of projection by the projection unit 10 is required to be increased.

In contrast, in the embodiment, the indication direction $\theta_1$ of the road 84 is displayed, so that the driver V can recognize the road 84 to which the traffic sign 82 is applied, even though the traffic sign icon virtual image 91' or the figure virtual image 92' is not superimposed at the position where the road 84 is visible in the forward view 100.

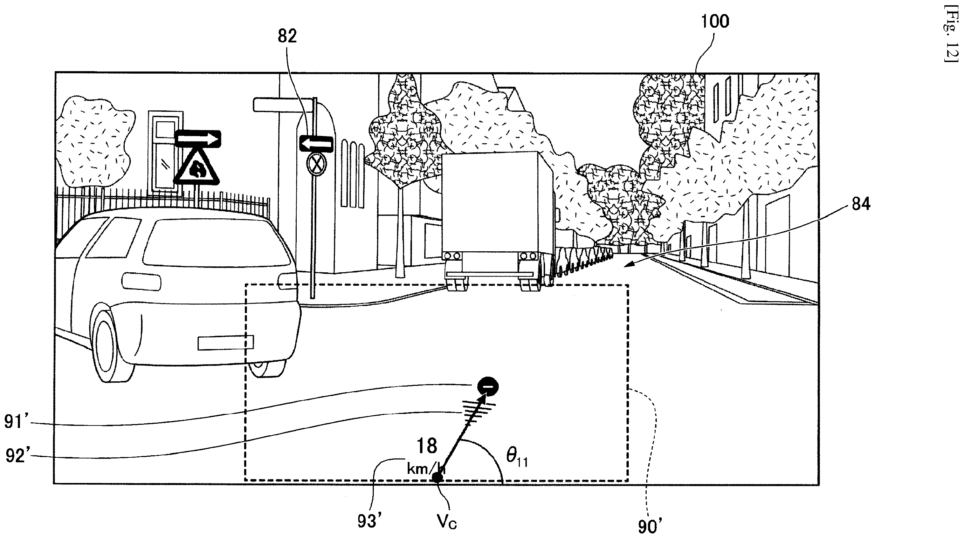

Fig. 12 is a drawing illustrating an example of a forward view 100 that has changed from the state of Fig. 11 as a result of movement of the vehicle 8. According to the movement of the vehicle 8, the forward view 100 changes, and the indication direction of the road 84 as seen from the driver V has also changed from $\theta_1$ to $\theta_{11}$. According to the change in the indication direction, the position where the traffic sign icon virtual image 91' is displayed has also changed.

According to the change in the indication direction, the position and the shape of the figure virtual image 92' have changed. The three-dimensional conical shape of the figure virtual image 92' has changed, so that, as compared with the case where the direction is simply indicated by an arrow and the like, the direction can be displayed with a higher degree of reality. Regardless of the movement of the vehicle 8, the position of the vehicle speed virtual image 93' is fixed, and only the numerical value indicating the vehicle speed is changed.

The traffic sign icon virtual image 91' and the figure virtual image 92' are arranged around the vehicle speed virtual image 93' on a line connecting the reference position Vc and the road position 84b, and according to the indication direction, the positions of the traffic sign icon virtual image 91' and the figure virtual image 92' change along the circumferences around the vehicle speed virtual image 93'.

Fig. 9 and Fig. 10 illustrate an example for displaying only the indication direction $\theta_1$ of the road 84 to which the traffic sign 82 is applied. However, the indication direction $\theta_2$ of the road 85 to which the traffic sign 83 is applied can also be displayed in a similar manner.

<Advantageous effects of the display apparatus 1>

Next, the advantageous effects of the display apparatus 1 are explained.

There is a display apparatus such as a head up display for recognizing traffic signs such as road signs, road surface marking, and the like in front of the vehicle on the basis of an image of the forward view from the vehicle obtained by a camera attached to the vehicle and superimposing virtual images of traffic sign icon images at positions of the road that are visible in the forward view.

However, with such a display apparatus, in a case where a path such as a road, to which the traffic sign is applied, or the traffic sign are visible in proximity to an edge portion and the like of the forward view, the display apparatus is required to project a wide-angle view in order to superimpose virtual images of predetermined images such as traffic sign icon images at positions of traffic signs in the forward view. For example, a virtual image with a size larger than the virtual image 90' of the projection image in Fig. 10 is required to be superimposed.

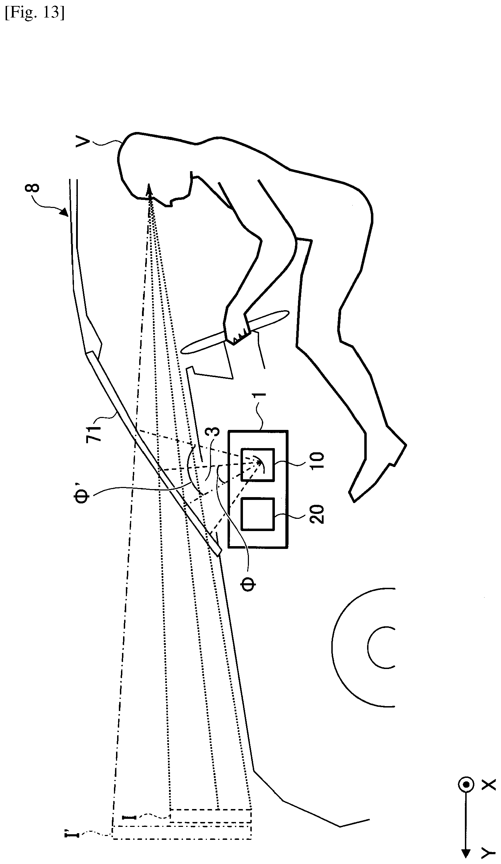

In this case, Fig. 13 is a drawing for explaining an increase in the angle of view of projection by the projection unit 10. As illustrated in Fig. 13, when the driver V sees a virtual image I' that is of a larger size than the virtual image I, an angle $\varphi'$ of view of projection that is larger than the angle $\varphi$ of view of projection for the virtual image I is required. When the angle of view of projection is increased, the size of the display apparatus may increase, and complex and expensive projection lenses may be required to ensure the quality of the virtual image.

In contrast, in the present embodiment, an indication direction in which either the target road or the traffic sign is present is displayed to the driver V. For example, the traffic sign icon image is arranged along the indication direction in the virtual image, and the image generation unit 26 generates a projection image including a figure indicating the indication direction to cause the virtual image of the generated projection image to be displayed, so that the indication direction is displayed to the driver V.

In the embodiment, the direction is displayed to the driver V, and accordingly, it is not necessary to superimpose a virtual image of a predetermined image such as a traffic sign icon image at the position of the target road that are visible in the forward view, and it is not necessary to increase the angle of view of projection. Therefore, even with a small angle of view of projection such as the angle $\varphi$ of view of projection in Fig. 13, either the target road or the traffic sign can be displayed.

Traffic signs include regulatory traffic signs indicating regulations on roads such as "Do Not Enter", "Stop", and the like, and auxiliary traffic signs for calling for attention according to an ambient environment of a road such as a presence of a school in close proximity, a pedestrian crossing in close proximity, and the like. In the regulatory traffic signs indicating regulations on roads, it is preferable to allow the driver V to recognize the target road, but in a case of the auxiliary traffic signs, it is preferable to allow the driver V to recognize the traffic sign itself rather than the target road.

In contrast, in the present embodiment, the display apparatus 1 includes a direction target determination unit configured to determine, as the target type of the indication direction, either the target road or the traffic sign on the basis of the traffic sign. Therefore, when the target type of the indication direction is the target road, the indication direction of the target road can be displayed, and in the case of the auxiliary traffic signs, the indication direction of the traffic sign can be displayed, so that information appropriate for the traffic sign can be provided to the driver V.

In the present embodiment, the indication direction that changes according to the movement of the vehicle 8 can be displayed. Therefore, according to a change in the situation caused by the movement of the vehicle 8, appropriate information can be provided to the driver V.

In the present embodiment, the indication direction can be displayed by arranging the traffic sign icon image 91 along the indication direction around the fixed image such as the vehicle speed image 93 arranged in a fixed manner in the projection image. The fixed image is frequently seen by the driver V, and in many cases, the fixed image is fixed at a position where the driver V can easily see the fixed image. The traffic sign icon image 91 is arranged around such a fixed image, so that the indication direction can be displayed to the driver V to allow the driver V to easily see the indication direction.

Although, in the present embodiment, both of the traffic sign icon image 91 and the figure image 92 are displayed together as the predetermined image, either the traffic sign icon image 91 or the figure image 92 may be displayed as the predetermined image. Also, the figure image 92 may be a simple figure image of an arrow or a character image indicating the indication direction with an indication of an angle and the like. Although, in the present embodiment, the position of the traffic sign icon image 91 is changed along the indication direction in order to display the indication direction, the indication direction may be displayed by rotating the traffic sign icon image 91 without changing its position.

In the present embodiment, the image processing apparatus 15 obtains the position information about the traffic sign and the road on the basis of images captured by the forward camera 164, but the present embodiment is not limited thereto. The image processing apparatus 15 obtains the road in front of the vehicle 8 and the position information about the traffic sign by using information received from the car navigation system 11. Also, the vehicle 8 may be provided with a gyro sensor for detecting the orientation of the vehicle 8, and the detection value of the gyro sensor may be used.

In the present embodiment, the image storage unit 21 stores the traffic sign icon image, but the present embodiment is not limited thereto. The image storage unit 21 may store character images including characters expressing information indicated by traffic signs. The image storage unit 21 may store figure images displaying traffic signs in a simplified manner.

In the present embodiment, the identification unit 22 obtains the traffic sign icon image and the identification information by referring to the image storage unit 21, and the direction target determination unit 23 determines the target type of the indication direction by referring to the direction table storage unit 24, but the present embodiment is not limited thereto. The identification unit 22 and the direction target determination unit 23 may achieve such functions by using the machine learning explained above.

In the present embodiment, the indication direction θ is obtained by two-dimensional image processing using an image captured by the monocular forward camera 164, but the present embodiment is not limited thereto. The indication direction θ may be obtained by three-dimensional image processing based on a projection relationship by using distance information of a distance to either the target road or the traffic sign detected by a stereo camera and the like serving as the forward camera 164 and a known relationship in position between the vehicle 8 and the driver V. With such three-dimensional image processing, the driver V can visually recognize, with a higher degree of reality, the virtual image of the predetermined image to find the indication direction.

<Second embodiment>

Next, the display apparatus 1a according the second embodiment is explained.

When the vehicle 8 moves, the traffic sign may be out of the forward view of the vehicle 8, and accordingly, the forward camera 164 may no longer be able to obtain information about the traffic sign. In this case, the traffic sign icon image corresponding to the traffic sign of which information is no longer obtained may be hidden, but if the traffic sign is a traffic sign that is applicable to a certain section of a road, such as a speed limit, it may be preferable to continue showing the virtual image of the traffic sign icon image to the driver V even after the information is no longer obtained.

In the present embodiment, when the forward camera 164 is no longer able to obtain information about the traffic sign due to the movement of the vehicle 8, a projection image including a traffic sign icon image fixed at a predetermined position is generated. Therefore, even when the information is no longer obtained, the display apparatus 1a according to the second embodiment allows the virtual image of the traffic sign icon image to remain within the view of the driver V.

Whether to generate a projection image including a traffic sign icon image fixed at a predetermined position or a projection image not including a traffic sign icon image is selected according to the traffic sign. Therefore, when information is no longer obtained, whether to display the virtual image of the traffic sign icon image or hide the traffic sign icon image can be selected according to the traffic sign.

<Example of functional configuration of control unit 20>

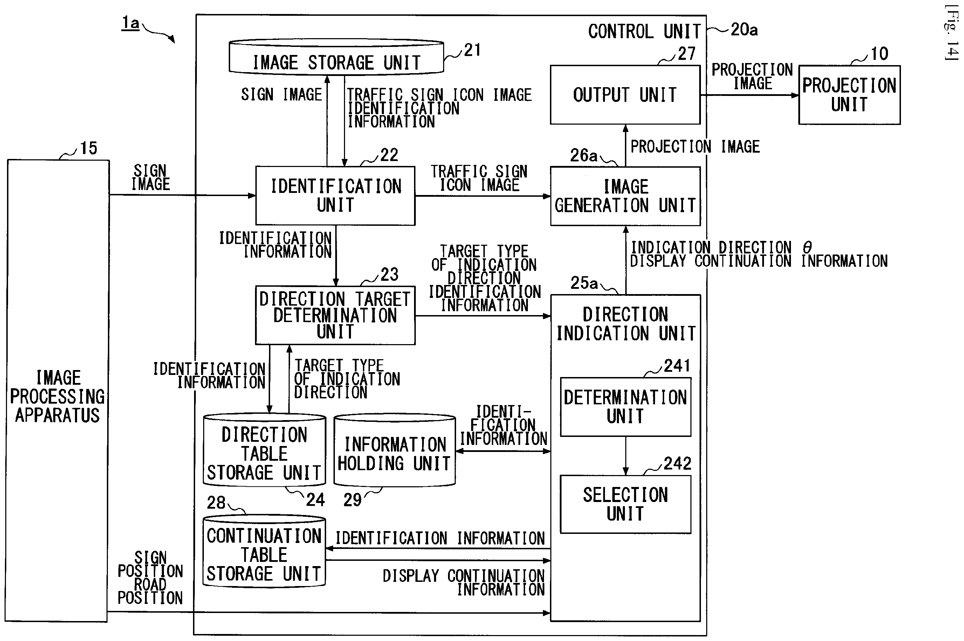

Fig. 14 is a block diagram illustrating an example of a functional configuration of a control unit 20a of the display apparatus 1a. As illustrated in Fig. 14, the control unit 20a includes a continuation table storage unit 28, an information holding unit 29, a direction indication unit 25a, and an image generation unit 26a. The direction indication unit 25a includes a determination unit 241 and a selection unit 242.

Among them, the functions of the continuation table storage unit 28 are achieved by the HDD 210 and the like, and the functions of the information holding unit 29 are achieved by the RAM 204 and the like.

The continuation table storage unit 28 stores a correspondence table indicating the correspondence between identification information and display continuation information defined in advance. In this case, the display continuation information is information indicating that the traffic sign icon image is to be either fixed at a predetermined position or is to be hidden. For example, when the traffic sign icon image is to be fixed, the display continuation information is set to "1", and when the traffic sign icon image is to be hidden, the display continuation information is set to "0".

The information holding unit 29 temporarily holds the identification information about the traffic sign before a movement of the vehicle 8. Because the vehicle 8 is constantly moving while the vehicle 8 is cruising, it is preferable that identification information in a cycle previous to a predetermined cycle in the image capturing sequence of the forward camera 164 is adopted as the identification information about the traffic sign before the movement of the vehicle 8, so that the identification information immediately before the movement can be obtained.

The direction indication unit 25a receives identification information from the direction target determination unit 23. Then, when information about a traffic sign is obtained, the obtained identification information is output to and held in the information holding unit 29. When information about a traffic sign is no longer obtained, the display continuation information is output to the image generation unit 26a. The direction indication unit 25a has not only the above functions but also functions similar to the functions of the direction indication unit 25.

The determination unit 241 of the direction indication unit 25a determines whether information about the traffic sign is obtained on the basis of the information about the sign position received from the image processing apparatus 15, and outputs the determination result to the selection unit 242.

Specifically, when the traffic sign is no longer included in the forward view of the vehicle 8, and the forward camera 164 no longer obtains the information about the traffic sign, the image processing apparatus 15 outputs missing sign information as explained with reference to Fig. 5. When the determination unit 241 receives the missing sign information, the determination unit 241 determines that the information about the traffic sign has not been obtained.

When the information about the traffic sign has not been obtained, the selection unit 242 selects, on the basis of the traffic sign, whether to either fix the traffic sign icon image at the predetermined position or hide the traffic sign icon image, and outputs the selection result to the image generation unit 26.

Specifically, when the information about the traffic sign is determined not to have been obtained, the selection unit 242 accesses the information holding unit 29 to obtain the identification information about the traffic sign temporarily held by the information holding unit 29. Then, the display continuation information is obtained by referring to the continuation table storage unit 28 on the basis of this identification information. This display continuation information corresponds to the above selection result.

When the image generation unit 26a receives display continuation information (for example, "1") indicating that the traffic sign icon image is to be fixed at the predetermined position, the image generation unit 26a generates a projection image including the traffic sign icon image fixed at the predetermined position. When the image generation unit 26a receives display continuation information (for example, "0") indicating that the traffic sign icon image is to be hidden, the image generation unit 26a generates a projection image not including a traffic sign icon image. When the information about the traffic sign is obtained (i.e., when the information about the sign position is not the missing sign information), the image generation unit 26a generates a projection image in which the traffic sign icon image is arranged in the direction of the indication direction θ with respect to the reference position.

<Example of processing of control unit 20a>

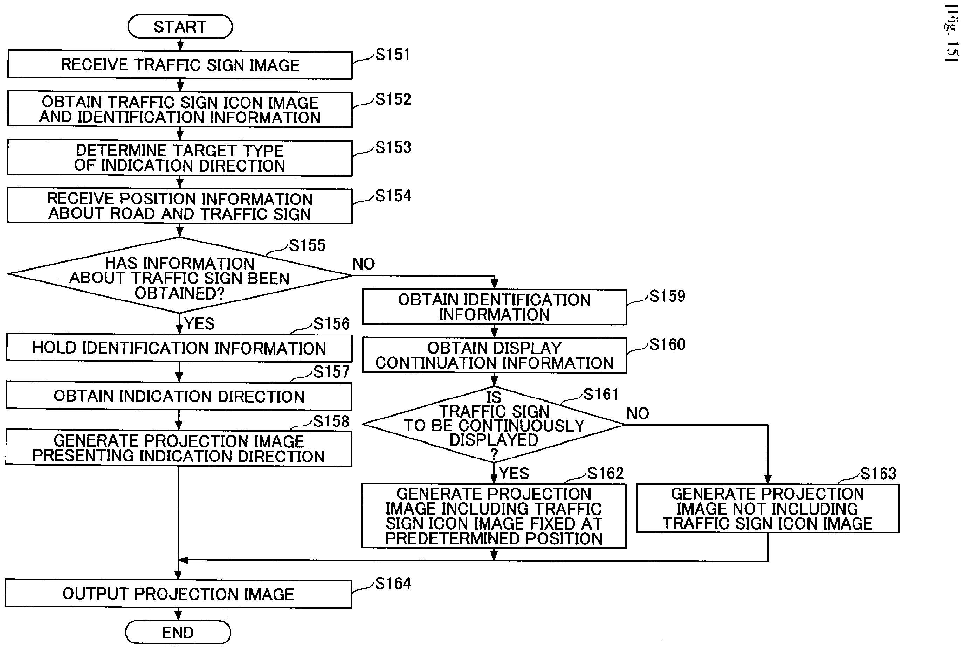

Next, a flow of processing by the control unit 20a is explained with reference to Fig. 15. Fig. 15 is a flowchart of an example of processing of the control unit 20a. The processing from steps S151 to S154 in Fig. 15 is similar to the processing from steps S81 to S84 in Fig. 8, and accordingly, repeated explanation thereabout is omitted. With respect to steps other than steps S151 to S154, duplicate explanations similar the explanations of Fig. 8 are omitted as necessary.

In step S155, the determination unit 241 determines whether the information about the traffic sign has been obtained on the basis of the information about the sign position received from the image processing apparatus 15.

When the information about the sign position is determined to have been obtained in step S155 (Yes in step S155), the direction indication unit 25a outputs the identification information about the traffic sign to the information holding unit 29 to cause the information holding unit 29 to hold the identification information about the traffic sign in step S156.

Subsequently, in step S157, the direction indication unit 25a obtains an indication direction θ in which either the target road or the traffic sign is present, and outputs the indication direction θ to the image generation unit 26a.

Subsequently, in step S158, the image generation unit 26a generates a projection image in which the traffic sign icon image is arranged in the direction of the indication direction θ with respect to the reference position. Thereafter, the processing in step S163 is performed.

When the information about the sign position is determined not to have been obtained in step S155 (No in step S155), the selection unit 242 accesses the information holding unit 29 to obtain the identification information about the traffic sign temporarily held by the information holding unit 29 in step S159.

Subsequently, in step S160, the selection unit 242 obtains the display continuation information by referring to the continuation table storage unit 28 on the basis of the identification information.

Subsequently, in step S161, the image generation unit 26a determines whether the traffic sign is to be continuously displayed on the basis of the display continuation information.

When the traffic sign is determined to be continuously displayed in step S161 (Yes in step S161), the image generation unit 26a generates a projection image including the traffic sign icon image fixed at the predetermined position in step S162. When the traffic sign is determined not to be continuously displayed in step S161 (No in step S161), the image generation unit 26a generates a projection image not including the traffic sign icon image in step S163.

Subsequently, in step S164, the output unit 27 outputs the projection image generated by the image generation unit 26a to the projection unit 10.

In this manner, when the forward camera 164 no longer obtains information about the traffic sign as a result of movement of the vehicle 8, the display apparatus 1a can generate, according to the traffic sign, either a projection image including the traffic sign icon image fixed at the predetermined position or a projection image not including the traffic sign icon image. Then, the virtual image of the projection image by the projection unit 10 can be displayed.

It should be noted that the traffic sign icon image fixed at the predetermined position may be hidden by the image generation unit 26a at a point in time when information about a new traffic sign is obtained from the forward image as a result of movement of the vehicle 8.

<Example of application of second embodiment>

Next, examples of applications of the display apparatus 1a are explained with reference to specific examples of forward images, projection images, and forward sceneries in which projection images are superimposed.

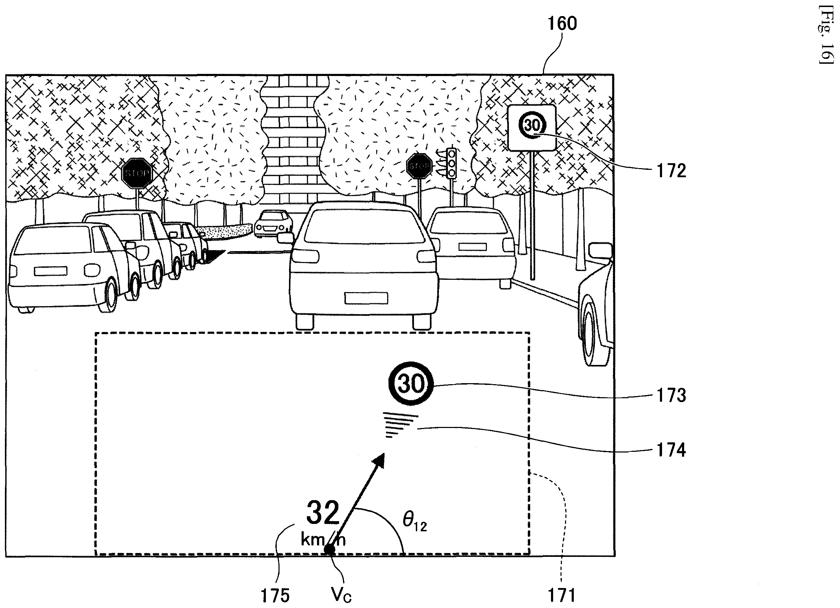

First, Fig. 16 is a drawing illustrating an example of a forward view 160 of the vehicle 8 according to the present embodiment. The forward view 160 is an image that the driver V visually recognizes by seeing a virtual image 171 of the projection image projected and superimposed by the display apparatus 1a onto the front windshield 71. The forward view 160 includes not only the virtual image 171 but also a traffic sign 172, a traffic sign icon virtual image 173, a figure virtual image 174, and a vehicle speed virtual image 175.

In the example of Fig. 16, the traffic sign is determined to be the target type of the indication direction, and the traffic sign icon virtual image 173 and the figure virtual image 174 are displayed along an indication direction $\theta_{12}$ of the traffic sign 172. The vehicle speed virtual image 175 is displayed in a fixed manner at a predetermined position.

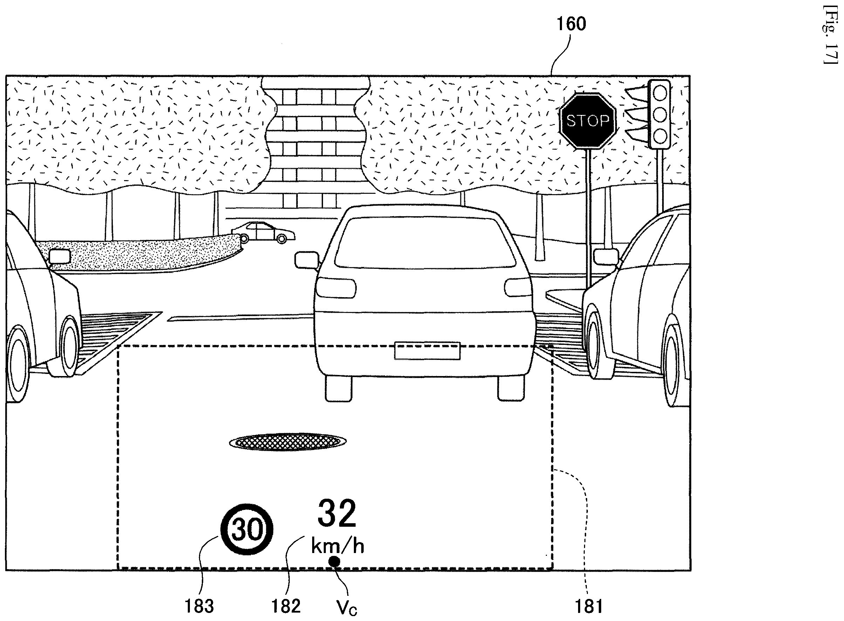

Next, Fig. 17 is a drawing illustrating an example of the forward view 160 that has changed from the state of Fig. 16 as a result of movement of the vehicle 8. According to the movement of the vehicle 8, the forward view 160 changes and no longer includes the traffic sign 172 illustrated in Fig. 16. In other words, in the state of Fig. 17, the information about the traffic sign is not obtained.

In the example as illustrated in Fig. 17, the traffic sign is a road sign of the speed limit, and is applied to a certain section of a road. Therefore, even after the information about the traffic sign is no longer obtained, it is preferable to continuously display the road sign. Therefore, the correspondence table in the continuation table storage unit 28 defines the road sign of the speed limit to be continuously displayed. The display apparatus 1a continuously displays the traffic sign icon virtual image 183 fixed besides the vehicle speed virtual image 182 on the basis of this correspondence table. It is preferable that the traffic sign icon virtual image 183 is displayed besides the vehicle speed virtual image 182, because the driver V can easily compare the vehicle speed of the vehicle 8 and the speed limit.

In Fig. 17, for example, the traffic sign icon virtual image 183 is displayed in a fixed manner besides the vehicle speed virtual image 182. However, the display position of the traffic sign icon virtual image 183 is not limited thereto, and the traffic sign icon virtual image 183 may be displayed at any position. The traffic sign icon virtual image 183 is preferably displayed at such a position that the driver V can easily see the traffic sign icon virtual image 183.

<Advantageous effects of the display apparatus 1a>

In a manner as explained above, in the present embodiment, when the information about the traffic sign is no longer obtained as a result of movement of the vehicle 8, a projection image including the traffic sign icon image fixed at the predetermined position is generated. Therefore, even when the information about the traffic sign is no longer obtained, the display apparatus 1a allows the driver V to continue to visually recognize the virtual image of the traffic sign icon image.

In addition, in the present embodiment, whether to either fix the traffic sign icon image at the predetermined position or hide the traffic sign icon image is selected according to the traffic sign. Therefore, when the information about the traffic sign is no longer obtained, whether to display, for the driver V, the virtual image of the traffic sign icon image fixed at the predetermined position or to hide the traffic sign icon image can be selected according to the traffic sign. In addition, information appropriate for the traffic sign can be provided to the driver V.

<Other embodiments>

The embodiment for carrying out the present invention has been described above with reference to specific examples, but the present invention is not limited to the particulars of the described examples and various modifications and substitutions can be made without departing from the scope of the claimed subject matter.

In the above embodiment, some or all of the functions provided in the image processing apparatus 15 may be provided in the control unit 20. Some of the functions provided in the control unit 20 may be provided in other constituent elements such as the image processing apparatus 15, the engine ECU 12, the detection apparatus 16, and the like. Information stored in the image storage unit 21, the direction table storage unit 24, and the like may be stored in an external server, and the stored information may be referred to by accessing the external server via a network.

In the embodiments, the road is an example of a path, the vehicle is an example of a moving body, and the HUD is an example of a display apparatus, but the embodiments are not limited thereto. The embodiments can be applied to paths other than roads, moving bodies other than vehicles, and display apparatuses other than the HUD.

The embodiments also include a display method. For example, the display method causes a display apparatus to display a virtual image of a projection image, and the display method includes obtaining a predetermined image obtained based on a traffic sign;causing an image generation unit (26) to generate the projection image including the predetermined image; and causing a direction indication unit (25) to output either an indication direction ($\Theta$) in which a target path, to which the traffic sign is applied, is present or an indication direction ($\Theta$) in which the traffic sign is present, the indication direction ($\Theta$) being determined based on a position of the traffic sign and a position of a path in front of the moving body (8). The method further includes causing the image generation unit (26) to generate the projection image including the indication direction ($\Theta$), the indication direction ($\Theta$) indicating a direction in which the target path or the traffic sign is present with respect to a reference position (Vc), wherein the projection image of a predetermined image size is generated with the reference position (Vc) being adjusted with respect to a forward image such that a traffic sign icon image is arranged in the direction of the indication direction ($\Theta$) with respect to the reference position (Vc). According to the display method, the effects similar to the effects achieved by the display apparatus can be obtained.

The embodiment also includes a program. For example, the program causes a computer to execute the display method disclosed above. According to the program, the effects similar to the effects achieved by the display apparatus can be obtained.

The functions of the embodiment explained above can be achieved by one or more processing circuits. In this case, the "processing circuit" in the present specification includes a processor programmed to execute the functions with software such as a processor implemented by an electronic circuit, and devices such as an application specific integrated circuit (ASIC), a digital signal processor (DSP), a field programmable gate array (FPGA), conventional circuit modules, and the like, designed to execute the functions explained above.

**Reference Signs List**

1 display apparatus
2 in-vehicle system
8 vehicle (example of moving body)
10 projection unit
15 image processing apparatus
151 sign area extraction unit
152 road area extraction unit
153 sign position obtaining unit
154 road position obtaining unit
16 detection apparatus
164 forward camera
20 control unit
21 image storage unit
22 identification unit

23 direction target determination unit
24 direction table storage unit
25 direction indication unit
26 image generation unit
27 output unit
28 continuation table storage unit
29 information holding unit
71 front windshield
80 forward image
82 traffic sign
84 road (example of path)
90 projection image
90' virtual image
91 traffic sign icon image (example of predetermined image)
91' traffic sign icon virtual image
92 figure image
92' figure virtual image
93 vehicle speed image
93' vehicle speed virtual image
100 forward view
210 HDD
Vc reference position
$\theta$, $\theta_1$, $\theta_2$, $\theta_{11}$, $\theta_{12}$ indication direction
$\varphi$ the angle of view of projection

**Claims**

1. A display apparatus (1) for being mounted on a moving body (8) and for displaying a virtual image of a projection image to a driver (V) of the moving body (8), comprising:

   an image processing apparatus (15) configured to execute image processing on an image of a forward view from the moving body (8) and to output position information;
   an identification unit (22) configured to obtain a traffic sign icon image based on a sign image received from the image processing apparatus (15);
   an image generation unit (26) configured to generate the projection image including a predetermined image obtained based on a traffic sign; **characterized in that** the display apparatus further comprises
   a direction indication unit (25) configured to output either an indication direction ($\theta$) in which a target path, to which the traffic sign is applied, is present or an indication direction ($\theta$) in which the traffic sign is present, based on a position of the traffic sign and a position of a path in front of the moving body (8), and to cause the image generation unit (26) to generate the projection image including the indication direction ($\theta$), the indication direction ($\theta$) indicating a direction in which the target path or the traffic sign is present with respect to a reference position (Vc), wherein

   the image generation unit (26) is configured to generate the projection image of a predetermined image size with the reference position (Vc) being adjusted with respect to a forward image such that a traffic sign icon image is arranged in the direction of the indication direction ($\theta$) with respect to the reference position (Vc).

2. The display apparatus (1) according to claim 1, wherein the indication direction ($\theta$) is either a direction in which the target path is present or a direction in which the traffic sign is present as seen from the driver of the moving body (8).

3. The display apparatus (1) according to claim 1 or 2, wherein the predetermined image is a traffic sign icon image indicating either a figure or a character corresponding to the traffic sign, or indicating both of the figure and the character.

4. The display apparatus (1) according to any one of claims 1 to 3, comprising:
   an identification unit configured to identify the traffic sign.

5. The display apparatus (1) according to any one of claims 1 to 4, comprising:
   a direction target determination unit configured to determine, as a target type of the indication direction ($\Theta$), either the target path or the traffic sign, based on the traffic sign.

6. The display apparatus (1) according to any one of claims 1 to 5, wherein the direction indication unit (25) displays the indication direction ($\Theta$) that changes according to a movement of the moving body (8).

7. The display apparatus (1) according to any one of claims 1 to 6, wherein the direction indication unit (25) displays the indication direction ($\Theta$) by causing the image generation unit (26) to generate the projection image including a figure image or a character image indicating the indication direction ($\Theta$).

8. The display apparatus (1) according to any one of claims 1 to 7, wherein the direction indication unit (25) displays the indication direction ($\Theta$) by causing the image generation unit (26) to generate the projection image including the predetermined image arranged along the indication direction ($\Theta$).

9. The display apparatus (1) according to claim 8, wherein the direction indication unit (25) displays the indication direction ($\Theta$) by causing the image generation unit (26) to generate the projection image including the predetermined image arranged along the indication direction (Θ) around a fixed image arranged in a fixed manner in the projection image.

10. The display apparatus (1) according to claim 8 or 9, wherein when information about the traffic sign is no longer obtained as a result of a movement of the moving body (8), the projection image generated by the image generation unit (26) includes the predetermined image remaining at a predetermined position.

11. The display apparatus (1) according to claim 10, wherein when information about the traffic sign is no longer obtained as a result of movement of the moving body (8), the projection image generated by the image generation unit (26) includes the predetermined image remaining at a predetermined position or does not include the predetermined image, based on the traffic sign.

12. A moving body (8) comprising the display apparatus (1) according to any one of claims 1 to 11.

13. A display method for causing a display apparatus (1) to display a virtual image of a projection image to a driver (V) of a moving body (8), comprising:

obtaining a predetermined image obtained based on a traffic sign;
causing an image generation unit (26) to generate the projection image including the predetermined image; and
causing a direction indication unit (25) to output either an indication direction (Θ) in which a target path, to which the traffic sign is applied, is present or an indication direction (Θ) in which the traffic sign is present, the indication direction (Θ) being determined based on a position of the traffic sign and a position of a path in front of the moving body (8); and
causing the image generation unit (26) to generate the projection image including the indication direction (θ), the indication direction (θ) indicating a direction in which the target path or the traffic sign is present with respect to a reference position (Vc), wherein

the projection image of a predetermined image size is generated with the reference position (Vc) being adjusted with respect to a forward image such that a traffic sign icon image is arranged in the direction of the indication direction (Θ) with respect to the reference position (Vc).

14. A program for causing a computer to execute the display method according to claim 13.

**Patentansprüche**

1. Eine Anzeigevorrichtung (1) zur Montage an einem sich bewegenden Körper (8) und zur Anzeige eines virtuellen Bildes eines Projektionsbildes für einen Fahrer (V) des sich bewegenden Körpers (8), umfassend:

eine Bildverarbeitungsvorrichtung (15), die dazu eingerichtet ist, eine Bildverarbeitung an einem Bild einer Vorwärtsansicht von dem sich bewegenden Körper (8) aus durchzuführen und Positionsinformationen auszugeben;
eine Identifizierungseinheit (22), die dazu eingerichtet ist, ein Verkehrszeichen-Symbolbild auf der Grundlage eines von der Bildverarbeitungsvorrichtung (15) empfangenen Zeichenbildes zu erhalten;
eine Bilderzeugungseinheit (26), die dazu eingerichtet ist, das Projektionsbild einschließlich eines vorgegebenen Bildes zu erzeugen, das auf der Grundlage eines Verkehrszeichens erhalten wird; **dadurch gekennzeichnet, dass** die Anzeigevorrichtung ferner umfasst:

eine Richtungsanzeigeeinheit (25), die dazu eingerichtet ist, entweder eine Anzeigerichtung (θ), in der ein Zielweg, auf den das Verkehrszeichen angewendet wird, vorhanden ist, oder eine Anzeigerichtung (θ), in der das Verkehrszeichen vorhanden ist, auf der Grundlage einer Position des Verkehrszeichens und einer Position eines Weges vor dem sich bewegenden Körper (8) auszugeben und die Bilderzeugungseinheit (26) zu veranlassen, das Projektionsbild einschließlich der Anzeigerichtung (θ) zu erzeugen, wobei die Anzeigerichtung (θ) eine Richtung anzeigt, in der der Zielweg oder das Verkehrszeichen in Bezug auf eine Referenzposition (Vc) vorhanden ist, wobei die Bilderzeugungseinheit (26) dazu eingerichtet ist, das Projektionsbild einer vorgegebenen Bildgröße zu erzeugen, wobei die Referenzposition (Vc) in Bezug auf ein Vorwärtsbild so eingestellt wird, dass ein Verkehrszeichen-Symbolbild in der Richtung der Anzeigerichtung (θ) in Bezug auf die Referenzposition (Vc) angeordnet wird.

2. Die Anzeigevorrichtung (1) nach Anspruch 1, wobei die Anzeigerichtung (θ) entweder eine Richtung ist, in der der Zielweg vorhanden ist, oder eine Richtung, in der das Verkehrszeichen vorhanden ist, wie vom Fahrer des sich bewegenden Körpers (8) aus gesehen.

3. Die Anzeigevorrichtung (1) nach Anspruch 1 oder 2, wobei das vorgegebene Bild ein Verkehrszeichen-Symbolbild ist, das entweder eine dem Verkehrszeichen entsprechende Figur oder ein entsprechendes Zeichen oder sowohl die Figur als auch das Zeichen anzeigt.

4. Die Anzeigevorrichtung (1) nach einem der Ansprüche 1 bis 3, mit:
einer Identifizierungseinheit, die dazu eingerichtet ist, das Verkehrszeichen zu identifizieren.

5. Die Anzeigevorrichtung (1) nach einem der Ansprüche 1 bis 4, umfassend:
eine Richtungszielbestimmungseinheit, die dazu eingerichtet ist, als einen Zieltyp der Anzeigerichtung (θ) entweder den Zielweg oder das Verkehrszeichen auf der Grundlage des Verkehrszeichens zu bestimmen.

6. Die Anzeigevorrichtung (1) gemäß einem der Ansprüche 1 bis 5, wobei die Richtungsanzeigeeinheit (25) die Anzeigerichtung (θ) anzeigt, die sich gemäß einer Bewegung des sich bewegenden Körpers (8) ändert.

7. Die Anzeigevorrichtung (1) gemäß einem der Ansprüche 1 bis 6, wobei die Richtungsanzeigeeinheit (25) die Anzeigerichtung (θ) anzeigt, indem sie die Bilderzeugungseinheit (26) veranlasst, das Projektionsbild zu erzeugen, das ein Figurenbild oder ein Zeichenbild enthält, das die Anzeigerichtung (θ) anzeigt.

8. Die Anzeigevorrichtung (1) nach einem der Ansprüche 1 bis 7, wobei die Richtungsanzeigeeinheit (25) die Anzeigerichtung (θ) anzeigt, indem sie die Bilderzeugungseinheit (26) veranlasst, das Projektionsbild einschließlich des vorgegebenen Bildes, das entlang der Anzeigerichtung (θ) angeordnet ist, zu erzeugen.

9. Die Anzeigevorrichtung (1) nach Anspruch 8, wobei die Richtungsanzeigeeinheit (25) die Anzeigerichtung (θ) anzeigt, indem sie die Bilderzeugungseinheit (26) veranlasst, das Projektionsbild einschließlich des vorgegebenen Bildes, das entlang der Anzeigerichtung (θ) angeordnet ist, um ein festes Bild herum zu erzeugen, das in einer festen Weise in dem Projektionsbild angeordnet ist.

10. Die Anzeigevorrichtung (1) nach Anspruch 8 oder 9, wobei, wenn infolge einer Bewegung des beweglichen Körpers (8) keine Informationen über das Verkehrszeichen mehr erhalten werden, das von der Bilderzeugungseinheit (26) erzeugte Projektionsbild das vorgegebene Bild enthält, das an einer vorgegebenen Position verbleibt.

11. Die Anzeigevorrichtung (1) nach Anspruch 10, wobei, wenn infolge einer Bewegung des beweglichen Körpers (8) keine Informationen über das Verkehrszeichen mehr erhalten werden, das von der Bilderzeugungseinheit (26) erzeugte Projektionsbild das vorgegebene Bild enthält, das an einer vorgegebenen Position verbleibt, oder das vorgegebene Bild nicht enthält, basierend auf dem Verkehrszeichen.

12. Ein sich bewegender Körper (8), der die Anzeigevorrichtung (1) nach einem der Ansprüche 1 bis 11 umfasst.

13. Ein Anzeigeverfahren, das eine Anzeigevorrichtung (1) dazu veranlasst, ein virtuelles Bild eines Projektionsbildes für einen Fahrer (V) eines sich bewegenden Körpers (8) anzuzeigen, umfassend:

das Erhalten eines vorgegebenen Bildes, das auf der Grundlage eines Verkehrszeichens erhalten wird;
das Veranlassen einer Bilderzeugungseinheit (26), das Projektionsbild einschließlich des vorgegebenen Bildes zu erzeugen; und
das Veranlassen einer Richtungsanzeigeeinheit (25), entweder eine Anzeigerichtung (θ), in der ein Zielweg, auf den das Verkehrszeichen angewendet wird, vorhanden ist, oder eine Anzeigerichtung (θ), in der das Verkehrszeichen vorhanden ist, auszugeben, wobei die Anzeigerichtung (θ) auf der Grundlage einer Position des Verkehrszeichens und einer Position eines Weges vor dem sich bewegenden Körper (8) bestimmt wird; und
das Veranlassen der Bilderzeugungseinheit (26), das Projektionsbild einschließlich der Anzeigerichtung (θ) zu erzeugen, wobei die Anzeigerichtung (θ) eine Richtung anzeigt, in der der Zielweg oder das Verkehrszeichen in Bezug auf eine Referenzposition (Vc) vorhanden ist, wobei das Projektionsbild einer vorgegebenen Bildgröße erzeugt wird, wobei die Referenzposition (Vc) in Bezug auf ein Vorwärtsbild so eingestellt wird, dass ein Verkehrszeichen-Symbolbild in der Richtung der Anzeigerichtung (θ) in Bezug auf die Referenzposition (Vc) angeordnet wird.

14. Ein Programm, das einen Computer veranlasst, das Anzeigeverfahren nach Anspruch 13 auszuführen.

## Revendications

1. Appareil d'affichage (1) destiné à être monté sur un corps mobile (8) et à afficher une image virtuelle d'une image de projection destinée à un conducteur (V) du corps mobile (8), comprenant :

un appareil de traitement d'image (15) conçu pour réaliser un traitement d'image sur une image d'une vue avant réalisée à partir du corps mobile (8) et pour émettre des informations d'emplacement ;

une unité d'identification (22) conçue pour obtenir une icône de panneau de signalisation en fonction d'une image de panneau reçue en provenance de l'appareil de traitement d'image (15) ;

une unité de génération d'image (26) conçue pour générer l'image de projection comprenant une image prédéterminée obtenue en fonction d'un panneau de signalisation ;

**caractérisé en ce que** l'appareil d'affichage comprend en outre une unité d'indication de direction (25) conçue pour émettre soit une direction d'indication ($\theta$) dans laquelle un trajet cible, auquel le panneau de signalisation est appliqué, est présente, soit une direction d'indication ($\theta$) dans laquelle le panneau de signalisation est présent, en fonction d'un emplacement du panneau de signalisation et d'un emplacement d'un trajet devant le corps mobile (8), et pour amener l'unité de génération d'image (26) à générer l'image de projection comprenant la direction d'indication ($\theta$), la direction d'indication ($\theta$) indiquant une direction dans laquelle le trajet cible ou le panneau de signalisation est présent par rapport à un emplacement de référence (Vc), étant entendu que

l'unité de génération d'image (26) est conçue pour générer l'image de projection d'une taille d'image prédéterminée, l'emplacement de référence (Vc) étant ajusté par rapport à une image avant de sorte qu'une icône de panneau de signalisation est agencée dans le sens de la direction d'indication ($\theta$) par rapport à l'emplacement de référence (Vc).

2. Appareil d'affichage (1) selon la revendication 1, dans lequel la direction d'indication ($\theta$) est soit une direction dans laquelle le trajet cible est présent, soit une direction dans laquelle le panneau de signalisation est présent, vu par le conducteur du corps mobile (8).

3. Appareil d'affichage (1) selon la revendication 1 ou 2, dans lequel l'image prédéterminée est une icône de panneau de signalisation indiquant soit une forme, soit une indication lettrée correspondant au panneau de signalisation, ou indiquant à la fois la forme et l'indication lettrée.

4. Appareil d'affichage (1) selon l'une quelconque des revendications 1 à 3, comprenant : une unité d'identification conçue pour identifier le panneau de signalisation.

5. Appareil d'affichage (1) selon l'une quelconque des revendications 1 à 4, comprenant : une unité de détermination de cible de direction conçue pour déterminer, en tant que type de cible de la direction d'indication ($\theta$), soit le trajet cible, soit le panneau de signalisation, en fonction du panneau de signalisation.

6. Appareil d'affichage (1) selon l'une quelconque des revendications 1 à 5, dans lequel l'unité d'indication de direction (25) affiche la direction d'indication ($\theta$) qui change selon un mouvement du corps mobile (8).

7. Appareil d'affichage (1) selon l'une quelconque des revendications 1 à 6, dans lequel l'unité d'indication de direction (25) affiche la direction d'indication ($\theta$) en amenant l'unité de génération d'image (26) à générer l'image de projection comprenant une image de forme ou une image d'indication lettrée indiquant la direction d'indication ($\theta$).

8. Appareil d'affichage (1) selon l'une quelconque des revendications 1 à 7, dans lequel l'unité d'indication de direction (25) affiche la direction d'indication ($\theta$) en amenant l'unité de génération d'image (26) à générer l'image de projection comprenant l'image prédéterminée agencée le long de la direction d'indication ($\theta$).

9. Appareil d'affichage (1) selon la revendication 8, dans lequel l'unité d'indication de direction (25) affiche la direction d'indication ($\theta$) en amenant l'unité de génération d'image (26) à générer l'image de projection comprenant l'image prédéterminée agencée le long de la direction d'indication ($\theta$) autour d'une image fixe agencée de manière fixe dans l'image de projection.

10. Appareil d'affichage (1) selon la revendication 8 ou 9, dans lequel, lorsque des informations relatives au panneau de signalisation ne sont plus obtenues à la suite d'un mouvement du corps mobile (8), l'image de projection générée par l'unité de génération d'image (26) comprend l'image prédéterminée qui demeure à un emplacement prédéterminé.

11. Appareil d'affichage (1) selon la revendication 10, dans lequel, lorsque des informations relatives au panneau de signalisation ne sont plus obtenues à la suite d'un mouvement du corps mobile (8), l'image de projection générée par l'unité de génération d'image (26) comprend l'image prédéterminée qui demeure à un emplacement prédéterminé ou ne comprend pas l'image prédéterminée, en fonction du panneau de signalisation.

12. Corps mobile (8) comprenant l'appareil d'affichage (1) selon l'une quelconque des revendications 1 à 11.

**13.** Procédé d'affichage permettant d'amener un appareil d'affichage (1) à afficher une image virtuelle d'une image de projection destinée à un conducteur (V) du corps mobile (8), comprenant :

l'obtention d'une image prédéterminée obtenue en fonction d'un panneau de signalisation ;
la génération, par une unité de génération d'image (26), d'une image de projection comprenant l'image prédéterminée ;
l'émission, par une unité d'indication de direction (25), soit d'une direction d'indication ($\theta$) dans laquelle un trajet cible, auquel le panneau de signalisation est appliqué, est présent, soit d'une direction d'indication ($\theta$) dans laquelle le panneau de signalisation est présent, la direction d'indication ($\theta$) étant déterminée en fonction d'un emplacement du panneau de signalisation et d'un emplacement d'un trajet à l'avant du corps mobile (8) ; et
la génération, par l'unité de génération d'image (26), d'une image de projection comprenant la direction d'indication ($\theta$), la direction d'indication ($\theta$) indiquant une direction dans laquelle le trajet cible ou le panneau de signalisation est présent par rapport à un emplacement de référence (Vc), étant entendu que
l'image de projection d'une taille d'image prédéterminée est générée avec un ajustement de l'emplacement de référence (Vc) par rapport à une image avant de sorte qu'une icône de panneau de signalisation est agencée dans le sens de la direction d'indication ($\theta$) par rapport à l'emplacement de référence (Vc).

**14.** Programme permettant d'amener un ordinateur à réaliser le procédé d'affichage selon la revendication 13.

[Fig. 1]

[Fig. 2]

[Fig. 3]

**2**

| CAR NAVIGATION SYSTEM (11) | ENGINE ECU (12) | DISPLAY APPARATUS (1) |
| BRAKE ECU (13) | STEERING ECU (14) | IMAGE PROCESSING APPARATUS (15) | DETECTION APPARATUS (16) |

NW

[Fig. 4]

[Fig. 5]

EP 4 081 421 B1

[Fig. 6]

[Fig. 7]

[Fig. 8]

```
                    ┌─────────────────┐
                    │      START      │
                    └─────────────────┘
                             │
                             ▼                    ⟋S81
    ┌────────────────────────────────────────────────────┐
    │             RECEIVE TRAFFIC SIGN IMAGE              │
    └────────────────────────────────────────────────────┘
                             │
                             ▼                    ⟋S82
    ┌────────────────────────────────────────────────────┐
    │   OBTAIN TRAFFIC SIGN ICON IMAGE AND IDENTIFICATION │
    │                    INFORMATION                      │
    └────────────────────────────────────────────────────┘
                             │
                             ▼                    ⟋S83
    ┌────────────────────────────────────────────────────┐
    │     DETERMINE TARGET TYPE OF INDICATION DIRECTION   │
    └────────────────────────────────────────────────────┘
                             │
                             ▼                    ⟋S84
    ┌────────────────────────────────────────────────────┐
    │  RECEIVE POSITION INFORMATION ABOUT ROAD AND TRAFFIC│
    │                       SIGN                          │
    └────────────────────────────────────────────────────┘
                             │
                             ▼                    ⟋S85
    ┌────────────────────────────────────────────────────┐
    │              OBTAIN INDICATION DIRECTION            │
    └────────────────────────────────────────────────────┘
                             │
                             ▼                    ⟋S86
    ┌────────────────────────────────────────────────────┐
    │             GENERATE PROJECTION IMAGE              │
    └────────────────────────────────────────────────────┘
                             │
                             ▼                    ⟋S87
    ┌────────────────────────────────────────────────────┐
    │              OUTPUT PROJECTION IMAGE               │
    └────────────────────────────────────────────────────┘
                             │
                             ▼
                    ┌─────────────────┐
                    │       END       │
                    └─────────────────┘
```

[Fig. 9]

[Fig. 10]

[Fig. 11]

[Fig. 12]

[Fig. 13]

[Fig. 14]

Fig. 14 — Block diagram including IMAGE PROCESSING APPARATUS (15), CONTROL UNIT (20a), IMAGE STORAGE UNIT (21), IDENTIFICATION UNIT (22), DIRECTION TARGET DETERMINATION UNIT (23), DIRECTION TABLE STORAGE UNIT (24), DIRECTION INDICATION UNIT (25a) with DETERMINATION UNIT (241) and SELECTION UNIT (242), IMAGE GENERATION UNIT (26a), OUTPUT UNIT (27), CONTINUATION TABLE STORAGE UNIT (28), INFORMATION HOLDING UNIT (29), and PROJECTION UNIT (10).

[Fig. 15]

EP 4 081 421 B1

```
                    ( START )
                        │
         ┌──────────────▼──────────────┐
         │   RECEIVE TRAFFIC SIGN IMAGE │──S151
         └──────────────┬──────────────┘
         ┌──────────────▼──────────────┐
         │  OBTAIN TRAFFIC SIGN ICON IMAGE │──S152
         │   AND IDENTIFICATION INFORMATION │
         └──────────────┬──────────────┘
         ┌──────────────▼──────────────┐
         │   DETERMINE TARGET TYPE      │──S153
         │   OF INDICATION DIRECTION    │
         └──────────────┬──────────────┘
         ┌──────────────▼──────────────┐
         │  RECEIVE POSITION INFORMATION │──S154
         │  ABOUT ROAD AND TRAFFIC SIGN  │
         └──────────────┬──────────────┘
                        │
                 ╱──────▼──────╲     S155
                ╱  HAS INFORMATION ╲  NO
               ╱ ABOUT TRAFFIC SIGN BEEN╲────────────┐
               ╲      OBTAINED?      ╱                │
                ╲──────┬──────╱            ┌──────────▼──────────┐
                       │YES    S156        │ OBTAIN IDENTIFICATION │──S159
         ┌─────────────▼────────────┐      │     INFORMATION       │
         │ HOLD IDENTIFICATION       │      └──────────┬──────────┘
         │ INFORMATION               │      ┌──────────▼──────────┐
         └─────────────┬────────────┘      │  OBTAIN DISPLAY       │──S160
                       │         S157       │ CONTINUATION INFORMATION │
         ┌─────────────▼────────────┐      └──────────┬──────────┘
         │ OBTAIN INDICATION DIRECTION │              │
         └─────────────┬────────────┘          ╱──────▼──────╲  S161
                       │         S158          ╱      IS       ╲  NO
         ┌─────────────▼────────────┐        ╱  TRAFFIC SIGN    ╲─────────┐
         │ GENERATE PROJECTION IMAGE │       ╲ TO BE CONTINUOUSLY ╱       │
         │ PRESENTING INDICATION     │        ╲   DISPLAYED     ╱         │
         │ DIRECTION                 │         ╲─────┬─────╱              │
         └─────────────┬────────────┘               │YES    S162         │ S163
                       │              ┌──────────────▼────────┐  ┌────────▼────────┐
                       │              │ GENERATE PROJECTION    │  │ GENERATE PROJECTION │
                       │              │ IMAGE INCLUDING TRAFFIC │  │ IMAGE NOT INCLUDING │
                       │              │ SIGN ICON IMAGE FIXED AT │ │ TRAFFIC SIGN ICON IMAGE │
                       │              │ PREDETERMINED POSITION  │  └────────┬────────┘
                       │              └──────────────┬────────┘           │
                       │◄────────────────────────────┴────────────────────┘
         ┌─────────────▼────────────┐
         │  OUTPUT PROJECTION IMAGE  │──S164
         └─────────────┬────────────┘
                    ( END )
```

[Fig. 16]

[Fig. 17]

**EP 4 081 421 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014214713 A1
- DE 102015209004 A1
- JP 2018200626 A